# EUROPÄISCHE PATENTSCHRIFT

(11) **EP 3 953 091 B1**
(45) Veröffentlichungstag und Bekanntmachung des Hinweises auf die Patenterteilung: **31.05.2023**
(21) Anmeldenummer: 20715414.7
(22) Anmeldetag: 07.04.2020
(51) Int. Cl.: B23K 9/02, B23K 9/06, B23K 9/10, B23K 9/12, B23K 9/173

(54) **MEHRFACH SCHWEISSVERFAHREN**
MULTIPLE WELDING METHOD
PROCÉDÉ DE SOUDAGE MULTIPLE

(30) Priorität: 10.04.2019 EP 19168534
(43) Veröffentlichungstag der Anmeldung: 16.02.2022
(73) Patentinhaber: FRONIUS INTERNATIONAL GmbH, 4643 Pettenbach (AT)
(72) Erfinder: SÖLLINGER, Dominik, 4643 Pettenbach (AT); WALDHÖR, Andreas, 4643 Pettenbach (AT)
(74) Vertreter: Patentanwälte Pinter & Weiss OG
(86) Internationale Anmeldenummer: PCT/EP2020/059899
(87) Internationale Veröffentlichungsnummer: WO 2020/208020

(56) Entgegenhaltungen:
- WO-A1-2005/056228
- CN-A- 108 176 915
- JP-A- 2002 224 833
- US-A1- 2015 343 549

## Beschreibung

Die Erfindung betrifft ein Verfahren zur Durchführung eines Mehrfach-Schweißverfahrens, bei dem mit zumindest zwei Schweißdrähten als abschmelzende Elektroden an einem Werkstück jeweils ein Schweißprozess durchgeführt wird, wobei ein erster Schweißdraht als Führungselektrode vorgesehen wird und der zumindest eine weitere Schweißdraht als Nachlaufelektrode vorgesehen wird, wobei die Schweißprozesse der Führungselektrode und der Nachlaufelektrode jeweils von einer Steuereinheit oder einer gemeinsamen Steuereinheit gesteuert werden, wobei ein Startvorgang des Mehrfach-Schweißverfahrens durchgeführt wird, indem die Steuereinheit der Führungselektrode einen Schweißdrahtvorschub der Führungselektrode startet und ein Synchronisationssignal an die Steuereinheit der Nachlaufelektrode sendet, wenn die Führungselektrode eine bestimmte Wegstrecke oder eine bestimmte Zeit bewegt wurde.

Weiters betrifft die Erfindung eine Schweißanordnung zur Durchführung eines Mehrfach-Schweißverfahrens an einem Werkstück mit zumindest zwei Schweißgeräten zur Durchführung voneinander unabhängiger Schweißprozesse, wobei jedes Schweißgerät einen Schweißdraht als abschmelzende Elektrode, eine Schweißdrahtvorschubeinheit und eine Steuereinheit zur Steuerung des jeweiligen Schweißprozesses aufweist, wobei ein Schweißdraht als Führungselektrode vorgesehen ist und der zumindest eine übrige Schweißdraht als Nachlaufelektrode vorgesehen ist, wobei zur Durchführung eines Startvorgangs des Mehrfach-Schweißverfahrens die Steuereinheit der Führungselektrode dazu ausgebildet ist, die Schweißdrahtvorschubeinheit des Schweißgeräts der Führungselektrode anzusteuern, um einen Schweißdrahtvorschub der Führungselektrode zu starten und ein Synchronisationssignal an die Steuereinheit der Nachlaufelektrode zu senden, wenn die Führungselektrode eine festgelegte Wegstrecke oder eine festgelegte Zeit bewegt wurde.

Die gegenständliche Erfindung betrifft ein Mehrfach-Schweißverfahren mit mehreren abschmelzenden Elektroden, insbesondere das bekannte MIG/MAG-Schweißen. Dabei ist beispielsweise ein Mehrfach-Impulsschweißverfahren bekannt, bei dem zumindest zwei Elektroden in ein gemeinsames Schmelzbad abschmelzen. Hierfür werden für jede Elektrode eigenständige Schweißgeräte benötigt, also jeweils eine Stromquelle, ein Schweißbrenner und eine Schweißdrahtvorschubeinheit. Mit jedem Schweißgerät wird dabei ein Impulsschweißprozess realisiert, wobei grundsätzlich aber auch andere Schweißprozesse durchführbar sind, beispielsweise ein Kurzlichtbogenschweißprozess, Sprühlichtbogenschweißprozess, Kurzlichtbogenschweißprozess mit reversierendem Schweißdrahtvorschub, etc. Das Mehrfach-Impulsschweißen kann so betrieben werden, dass die Schweißprozesse gestartet werden und unabhängig voneinander betrieben werden, dass also die Schweißdrahtvorschubgeschwindigkeit und die Impulsfrequenz für jeden Schweißprozess eigens eingestellt werden. Das ist für den Schweißer aber aufwendiger, da in allen Schweißgeräten die Schweißparameter entsprechend setzen muss. Abgesehen davon hat man damit wenig bis keinen Einfluss auf eine allfällige gegenseitige Beeinflussung durch die gleichzeitig ablaufenden Schweißprozesse, was die Schweißqualität vermindern kann. Daher ist auch schon ein Mehrfach-Impulsschweißverfahren mit synchronisierten Schweißprozessen bekannt geworden, bei dem ein Schweißgerät eine Impulsfrequenz vorgegeben wird, der das andere Schweißgerät nachfolgt. Beide Schweißprozesse sind damit aufeinander synchronisiert und schweißen mit derselben Impulsfrequenz.

Bei einem Mehrfach-Schweißverfahren kann beispielsweise auch ein einzelner Schweißbrenner mit mehreren, insbesondere zwei Elektroden vorgesehen sein. Die Elektroden sind dann in einem definierten festen Abstand und Winkel relativ zueinander am Schweißbrenner positioniert, um vorzugsweise in ein gemeinsames Schmelzbad an einem Werkstück zu arbeiten. Die Elektroden bzw. Schweißdrähte müssen aber nicht zwangsläufig in ein gemeinsames Schmelzbad abschmelzen, es wäre auch denkbar, dass die Elektroden so beabstandet sind, dass zwei getrennte Schmelzbäder entstehen. Man spricht aber trotzdem von einem Mehrfach-Schweißprozess. Beide Elektroden werden gemeinsam mit dem Schweißbrenner relativ zum Werkstück bewegt. Beispielsweise kann der Schweißbrenner dafür an einem Schweißroboter angeordnet sein, der eine vorgegebene Schweißbewegung ausführt. Es könnten aber auch zwei getrennte Schweißbrenner mit jeweils zumindest einer Elektrode vorgesehen sein, die relativ zueinander positioniert und im Wesentlichen gemeinsam bewegt werden. Die Bewegung kann beispielsweise wiederum jeweils von einem Schweißroboter durchgeführt werden, wobei sich die beiden Schweißbrenner während des Schweißprozesses vorzugsweise nicht relativ zueinander bewegt werden.

In der Regel wird eine der zumindest zwei Elektroden bzw. Schweißdrähte des Mehrfach-Schweißverfahrens als Führungselektrode verwendet und die zweite Elektrode (oder die anderen Elektroden) werden als sogenannte Nachlaufelektroden verwendet. Oftmals wird die Elektrode als Führungselektrode verwendet, die in Bewegungsrichtung des gemeinsamen Schweißbrenners (oder der gemeinsamen Bewegungsrichtung der getrennten Schweißbrenner) vorne angeordnet ist und die in Bewegungsrichtung dahinter angeordnete Elektrode wird als Nachlaufelektrode verwendet. Es wäre aber auch denkbar, dass zwei Schweißroboter vorgesehen sind, welche zwei Schweißbrenner in entgegengesetzte Richtungen bewegen. Die Elektrode eines Schweißbrenners wird dann als Führungselektrode verwendet wird und die Elektrode des anderen Schweißbrenners wird als Nachlaufelektrode verwendet. Die Zündung der Lichtbogen der Führungselektrode und der Nachlaufelektrode erfolgte bisher oftmals zufällig. Beispielsweise wurde der Schweißdrahtvorschub beider Elektroden gestartet und es wurde diejenige Elektrode zuerst gezündet, die zuerst das Werkstück kontaktiert. Das kann aber unter Umständen zu einer ungenauen Positionierung der Schweißnaht führen und/oder zu einem unkontrollierten Materialabtrag, was nachteilig ist.

CN 108 176 915 A offenbart einen Startvorgang eines Tandemschweißverfahrens mit einem Schweißbrenner an dem zwei Schweißdrähte vorgesehen sind. Zuerst wird der Vorschub des ersten Schweißdrahts gestartet. Wenn der erste Schweißdraht das Werkstück berührt entsteht ein Kurzschluss und ein Lichtbogen wird gezündet. Wenn der Lichtbogen stabil brennt wird der Vorschub des zweiten Schweißdrahts gestartet und ein Lichtbogen gezündet, wenn der zweite Schweißdraht den brennenden Lichtbogen des ersten Schweißdrahts erreicht.

JP 2002 224833A, welche die Basis für den Oberbegriff der Ansprüche 1 und 9 bildet, offenbart ein Mehrfach-Schweißverfahren mit einer Führungselektrode und einer Nachlaufelektrode. Zum Starten des Schweißprozesses wird zuerst nur der Vorschub der Führungselektrode gestartet, bis diese das Werkstück berührt und ein Kurzschluss entsteht, worauf ein Lichtbogen gezündet wird. Danach steuert eine Robotersteuerungseinheit den Schweißbrenner mit einer Schweißgeschwindigkeit in Schweißrichtung. Wenn eine Nachlaufelektrodenzeit abgelaufen ist, startet die Robotersteuerungseinheit den Vorschub der Nachlaufelektrode.

US 2015/343549 A1 offenbart ein Mehrfachschweißverfahren mit zwei Schweißgeräten zur Durchführung jeweils eines Schweißprozesses an einem Werkstück, wobei die Schweißprozesse von jeweils einer Steuerungseinheit gesteuert werden. Die Steuerungseinheiten der beiden Schweißgeräte sind über eine Synchronisierungs-Steuerungseinheit verbunden, welche die Schweißprozesse zeitlich synchronisiert, insbesondere eine Phasenverschiebung der Schweißströme.

In der EP 2 830 807 B wird beispielsweise vorgeschlagen, dass nach der Festlegung der Führungs- und Nachlaufelektrode der Drahtvorschub beider Elektroden gleichzeitig gestartet wird. Sobald die Führungselektrode das Werkstück kontaktiert, wird vom entsprechenden Schweißgerät ein Kurzschluss detektiert und der Lichtbogen wird unmittelbar gezündet. An der Nachlaufelektrode wird ebenfalls bei Berührung des Werkstücks ein Kurzschluss detektiert, allerdings wird hier nicht sofort ein Lichtbogen gezündet, sondern die Nachlaufelektrode wird in eine Bereitstellungsposition gebracht. Erst nach einer bestimmten Wartezeit wird die Nachlaufelektrode aus der Bereitstellungsposition in Richtung des Werkstücks bewegt und bei Berührung wird der Lichtbogen gezündet. Das Verfahren ist aber auf sogenannte Push-Pull-Systeme mit sehr leistungsfähigen Drahtvorschubeinheiten am Schweißbrenner beschränkt, die abwechselnd einen hochdynamischen Drahtvorschub in Richtung zum Werkstück hin und in Richtung vom Werkstück weg ermöglichen. Denn nur bei solchen Systemen kann der Startprozess in ausreichend geringer Zeit erfolgen. Bei weniger dynamischen Schweißsystemen, insbesondere sogenannten Push-Systemen, die keine separate Drahtvorschubeinheit am Schweißbrenner aufweisen und damit eine vergleichsweise langsame Drahtvorschubgeschwindigkeit und keine hochdynamische Vor- und Zurückbewegung des Schweißdrahts ermöglichen, ist das Verfahren ungeeignet, da der Zündvorgang zu lange dauern würde.

Es ist daher eine Aufgabe der gegenständlichen Erfindung, ein Mehrfach-Schweißverfahren mit einem verbesserten Startvorgang anzugeben, das auch bei einer bauartbedingt relativ langsamen Drahtvorschubgeschwindigkeit einen raschen und reproduzierbaren Start ermöglicht.

Erfindungsgemäß wird die Aufgabe mit dem eingangs genannten Verfahren dadurch gelöst, dass die Steuereinheit der Nachlaufelektrode einen Schweißdrahtvorschub der Nachlaufelektrode in Abhängigkeit des erhaltenen Synchronisationssignals startet, bevor die Führungselektrode das Werkstück berührt.

Es ist vorteilhaft, dass die Führungselektrode das Werkstück vor der Nachlaufelektrode berührt, wobei an der Führungselektrode bei Berührung des Werkstücks ein Lichtbogen gezündet wird und an der Nachlaufelektrode ein Lichtbogen gezündet wird, wenn die Nachlaufelektrode das Werkstück berührt oder in einen vom Lichtbogen der Führungselektrode ionisierten Umgebungsbereich der Führungselektrode eindringt. Die lonsierungsenergie muss dabei ausreichend groß sein, um den Lichtbogen zünden zu können.

Es ist vorteilhaft, dass wenn die Nachlaufelektrode das Werkstück vor der Führungselektrode berührt, die Steuereinheit der Nachlaufelektrode einen Kurzschluss detektiert und ein Synchronisationssignal an die Steuereinheit der Führungselektrode sendet, wobei die Steuereinheit der Führungselektrode den Schweißdrahtvorschub der Führungselektrode stoppt und die Steuereinheit der Nachlaufelektrode den Schweißdrahtvorschub der Nachlaufelektrode stoppt, dass die Steuereinheit der Nachlaufelektrode die Nachlaufelektrode auf einen bestimmten Elektrodenabstand vom Werkstück weg bewegt und ein Synchronisationssignal an die Steuereinheit der Führungselektrode sendet, dass die Steuereinheit der Führungselektrode den Schweißdrahtvorschub der Führungselektrode startet und ein Lichtbogen an der Führungselektrode gezündet wird, wenn die Führungselektrode das Werkstück berührt, wobei die Steuereinheit der Führungselektrode bei Zündung des Lichtbogens ein Synchronisationssignal an die Steuereinheit der Nachlaufelektrode sendet und dass die Steuereinheit der Nachlaufelektrode den Schweißdrahtvorschub der Nachlaufelektrode in Abhängigkeit des erhaltenen Synchronisationssignals startet, wobei an der Nachlaufelektrode ein Lichtbogen gezündet wird, wenn die Nachlaufelektrode das Werkstück berührt oder in einen vom Lichtbogen der Führungselektrode ionisierten Umgebungsbereich eindringt. Dadurch wird gewährleistet, dass an der Führungselektrode zuerst ein Lichtbogen gezündet wird, auch wenn die Nachlaufelektrode das Werkstück zuerst berührt.

Gemäß einer weiteren vorteilhaften Ausgestaltung ist vorgesehen, dass wenn die Nachlaufelektrode das Werkstück vor der Führungselektrode berührt, die Nachlaufelektrode als Führungselektrode festgelegt wird und die Führungselektrode als Nachlaufelektrode festgelegt wird, dass ein Lichtbogen an der Führungselektrode bei Berührung des Werkstücks gezündet wird und an der Nachlaufelektrode ein Lichtbogen gezündet wird, wenn die Nachlaufelektrode das Werkstück berührt oder in einen vom Lichtbogen der Führungselektrode ionisierten Umgebungsbereich eindringt. Dadurch kann die Zuordnung der Führungs- und Nachlaufelektrode in einfacher Weise getauscht werden, wodurch der Startvorgang beschleunigt wird.

Es ist vorteilhaft, wenn die Steuereinheit der Führungselektrode bei Zündung des Lichtbogens der Führungselektrode ein Synchronisationssignal an die Steuereinheit der Nachlaufelektrode sendet, dass die Steuereinheit der Nachlaufelektrode den Schweißdrahtvorschub der Nachlaufelektrode bei Erhalt des Synchronisationssignals stoppt und die Nachlaufelektrode eine bestimmte Wartezeit in einer Warteposition gehalten wird und nach Ablauf der Wartezeit die Steuereinheit der Nachlaufelektrode den Schweißdrahtvorschub der Nachlaufelektrode startet, wobei der Lichtbogen an der Nachlaufelektrode gezündet wird, wenn die Nachlaufelektrode das Werkstück berührt oder in den vom Lichtbogen der Führungselektrode ionisierten Umgebungsbereich der Führungselektrode eindringt. Dadurch kann auch eine längere Zeit zwischen der Zündung der beiden oder mehreren Elektroden realisiert werden.

Vorzugsweise wird als Schweißprozess der Führungselektrode und/oder der Nachlaufelektrode ein Impulsschweißprozess, ein Schweißprozess mit reversierendem Schweißdrahtvorschub, ein Sprühlichtbogenschweißprozess oder ein Kurzlichtbogenschweißprozess durchgeführt. Mit diesen bekannten Schweißprozessen können gute Schweißergebnisse erzielt werden, wobei auch mehrere Schweißprozesse kombiniert werden können.

Vorzugsweise werden die Führungselektrode und die Nachlaufelektrode einem gemeinsamen Schmelzbad am Werkstück zugeführt. Dadurch kann eine höhere Abschmelzleistung bzw. höherer Materialauftrag realisiert werden und es ist eine geringere Zündenergie zur Zündung der Nachlaufelektrode erforderlich, da die Nachlaufelektrode in die vom Lichtbogen der Führungselektrode ionisierten Umgebungsbereich der Führungselektrode eindringt und somit zur Zündung weniger Energie, insbesondere einen geringeren Schweißstrom benötigt.

Vorzugsweise wird für die Steuereinheit der Führungselektrode und die Steuereinheit der Nachlaufelektrode eine gemeinsame Steuereinheit vorgesehen, die den Schweißprozess an der Führungselektrode und den Schweißprozess an der Nachlaufelektrode steuert. Dadurch können beispielsweise Verzugszeiten in der Übertragung des Synchronisationssignals verringert werden.

Die Aufgabe wird weiters mit der eingangs genannten Schweißanordnung dadurch gelöst, dass die Steuereinheit der Nachlaufelektrode dazu ausgebildet ist, die Schweißdrahtvorschubeinheit des Schweißgeräts der Nachlaufelektrode anzusteuern, um einen Schweißdrahtvorschub der Nachlaufelektrode in Abhängigkeit des erhaltenen Synchronisationssignals zu starten, bevor die Führungselektrode das Werkstück berührt.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine Schweißanordnung mit zwei Schweißgeräten zur Durchführung eines Mehrfach-Schweißprozesses,
Fig.2A-2d einen Ablauf eines Startvorgangs eines Mehrfach-Schweißprozesses,
Fig.3A-3c einen weiteren Ablauf eines Startvorgangs eines Mehrfach-Schweißprozesses,
Fig.4 ein Diagramm mit Verläufen des Schweißstroms der Führungselektrode und des Schweißstroms der Nachlaufelektrode über der Zeit.

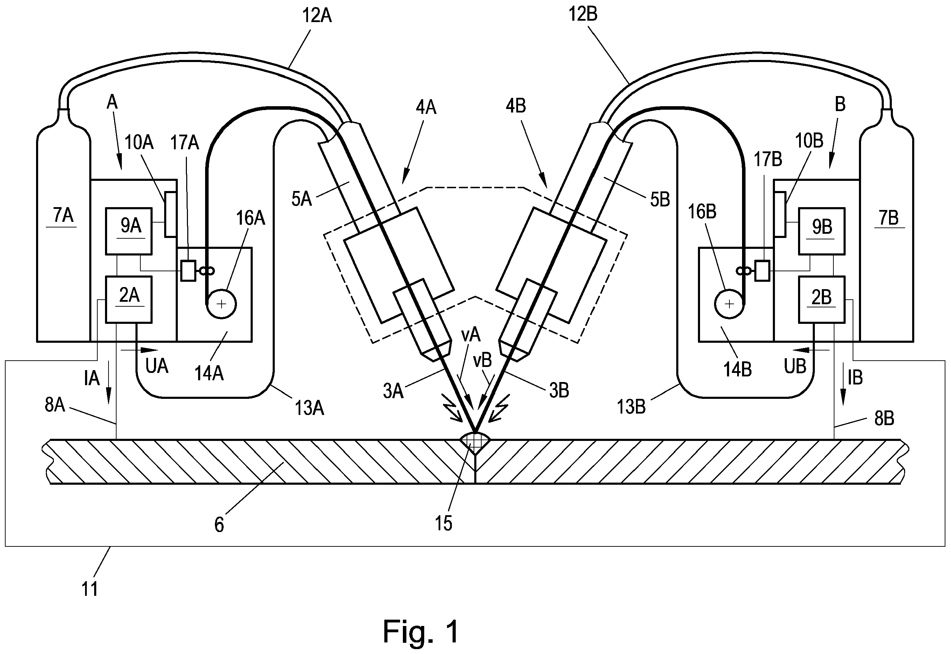

In Fig.1 ist eine Schweißanordnung 1 mit zwei voneinander unabhängigen Schweißgeräten A, B vereinfacht dargestellt. Die Schweißgeräte A, B sind hier als Schweißgeräte mit abschmelzender Elektrode ausgestaltet (MIG/MAG-Schweißen). Grundsätzlich könnte aber auch ein oder mehrere Schweißgeräte mit nicht abschmelzender Elektrode (WIG-Schweißen) mit automatischem Schweißdrahtvorschub eines Zusatzwerkstoffes verwendet werden. Im gezeigten Beispiel wird mit beiden Schweißgeräten A, B jeweils ein Schweißprozess an einem gemeinsamen Werkstück 6 durchgeführt. Natürlich könnten auch mehr als zwei Schweißgeräte A, B vorgesehen sein, für das Verständnis der Erfindung ist die Anordnung von zwei Schweißgeräten A, B jedoch ausreichend. Die Schweißgeräte A, B müssen auch nicht zwingend als separate Einheiten ausgeführt sein, sondern es wäre auch denkbar, dass die zwei (oder mehrere) Schweißgeräte A, B beispielsweise in einem gemeinsamen Gehäuse angeordnet sind. Das ändert aber nichts daran, dass jedes Schweißgerät A, B für sich einen eigenen Schweißstromkreis zur Durchführung eines Schweißprozesses ausbildet.

Die Schweißgeräte A, B weisen bekanntermaßen jeweils eine Schweißstromquelle 2A, 2B, eine Schweißdrahtvorschubeinheit 14A, 14B und einen Schweißbrenner 4A, 4B auf (MIG/MAG-Schweißgeräte). Die Schweißstromquellen 2A, 2B stellen jeweils die benötigte Schweißspannung UA, UB zur Verfügung, die jeweils an einen Schweißdraht 3A, 3B als abschmelzende Elektrode angelegt wird (oder an eine nicht abschmelzende Elektrode im Falle eines Schweißverfahrens mit nicht abschmelzender Elektrode wie z.B. WIG-Schweißen). Der Schweißdraht 3A, 3B wird dem jeweiligen Schweißbrenner 4A, 4B mittels der Schweißdrahtvorschubeinheit 14A, 14B mit einer bestimmten Schweißdrahtvorschubgeschwindigkeit vA, vB zugeführt. Die Zuführung kann beispielsweise innerhalb eines Schlauchpakets 5A, 5B oder auch außerhalb davon erfolgen. Die Schweißdrahtvorschubeinheit 14A, 14B kann jeweils im Schweißgerät A, B integriert sein, kann aber auch eine separate Einheit sein, so wie in Fig.1 dargestellt. Innerhalb der Schweißdrahtvorschubeinheit 14A, 14B kann beispielsweise eine Drahtrolle 16A, 16B vorgesehen sein, auf der der Schweißdraht 3A, 3B aufgewickelt ist. Der Schweißdraht 3A, 3B könnte aber beispielsweise auch in einem Behälter wie z.B. einem Fass angeordnet sein und von dort dem Schweißbrenner 4A, 4B zugeführt werden. Weiters kann eine geeignete Antriebseinheit 17A, 17B vorgesehen sein, die von der Steuereinheit 9A, 9B angesteuert wird, um den Schweißdraht 3A, 3B von der Drahtrolle 16A, 16B oder aus dem Behälter abzuwickeln und dem Schweißbrenner 4A, 4B mit einer Schweißdrahtvorschubgeschwindigkeit vA, vB zuzuführen.

Zur Durchführung eines Schweißprozesses wird jeweils ein Lichtbogen zwischen dem Schweißdraht 3A, 3B und dem Werkstück 6 gezündet, wie hier durch die Blitze symbolisiert ist. Durch den Lichtbogen wird einerseits das Material des Werkstücks 6 lokal aufgeschmolzen und ein sogenanntes Schmelzbad 15 erzeugt. Andererseits wird der Schweißdraht 3A, 3B mittels einer bestimmten Schweißdrahtvorschubgeschwindigkeit vA, vB dem Schmelzbad 15 zugeführt und vom Lichtbogen abgeschmolzen, um Material des Schweißzusatzstoffes (hier der Schweißdrähte 3A, 3B als abschmelzende Elektroden) auf das Werkstück 6 aufzutragen. Bei Bewegung des Schweißbrenners 4A, 4B relativ zum Werkstück 6 kann dadurch eine Schweißnaht ausgebildet werden (in Fig. 1 in Richtung normal auf die Zeichenebene).

Im jeweiligen Schlauchpaket 5A, 5B können gegebenenfalls auch weitere Leitungen zwischen dem Schweißgerät A, B und dem jeweiligen Schweißbrenner 4A, 4B (beispielsweise eine nicht dargestellte Steuerleitung oder eine Kühlmittelleitung) vorgesehen sein. Oftmals wird auch ein Schutzgas verwendet, um das Schmelzbad 15 vor der Umgebungsluft, insbesondere dem darin enthaltenen Sauerstoff abzuschirmen, um eine Oxidation zu vermeiden. Dabei kommen in der Regel inerte Gase (z.B. Argon), aktive Gase (z.B. CO2) oder Gemische davon zum Einsatz, welche dem Schweißbrenner 4A, 4B ebenfalls über das Schlauchpaket 5A, 5B mittels geeigneter Schutzgasleitungen 12A, 12B zugeführt werden können. Die Schutzgase sind üblicherweise in separaten (Druck-)Behältern 7A, 7B gelagert, welche z.B. über geeignete Leitungen den Schweißgeräten A, B (oder direkt dem Schweißbrenner 4A, 4B) zugeführt werden können. Bei Verwendung des gleichen Schutzgases könnte auch ein gemeinsamer Behälter für beide (alle) Schweißgeräte A, B vorgesehen sein. Natürlich kann ggf. auch ohne Schutzgas geschweißt werden. Das Schlauchpaket 5A, 5B kann an den Schweißbrenner 4A, 4B und am Schweißgerät A, B z.B. über geeignete Kupplungen angekoppelt werden.

Um jeweils einen Schweißstromkreis der Schweißgeräte A, B auszubilden, sind die Schweißstromquellen 2A, 2B jeweils mit einer Masseleitung 8A, 8B mit dem Werkstück 6 verbunden. Ein Pol der Schweißstromquelle 2A, 2B, üblicherweise der Minuspol, ist mit der Masseleitung 8A, 8B verbunden. Der andere Pol der Schweißstromquelle 2A, 2B, üblicherweise der Pluspol, ist über eine geeignete Stromleitung 13A, 13B mit der Schweißelektrode 4A, 4B verbunden (oder umgekehrt). Damit bildet sich für jeden Schweißprozess über den Lichtbogen und das Werkstück 6 ein Schweißstromkreis aus.

In den Schweißgeräten A, B ist auch jeweils eine Steuereinheit 9A, 9B vorgesehen, die den jeweiligen Schweißprozess inkl. des jeweiligen Schweißdrahtvorschubs steuert und überwacht. Hierfür sind in der Steuereinheit 9A, 9B für den Schweißprozess benötigte Schweißparameter, wie beispielsweise die Schweißdrahtvorschubgeschwindigkeit vA, vB, der Schweißstrom IA, IB, die Schweißspannung UA, UB, die Impulsfrequenz, die Impulsstromdauer, etc. vorgegeben oder einstellbar. Zum Steuern des Schweißprozesses ist die Steuereinheit 9A, 9B mit der Schweißstromquelle 2A, 2B und der Schweißdrahtvorschubeinheit 14A, 14B (z.B. insbesondere der Antriebseinheit 17A, 17B) verbunden. Zur Eingabe oder zur Anzeige gewisser Schweißparameter oder eines Schweißstatus kann auch eine mit der Steuereinheit 9A, 9B verbundene Benutzerschnittstelle 10A, 10B vorgesehen sein. Weiters könnte auch eine geeignete (nicht dargestellte) Schnittstelle am Schweißgerät A, B vorgesehen sein, über welche das Schweißgerät A, B mit einer externen Steuereinheit verbunden werden kann, über die das Schweißgerät A, B gesteuert wird. Beispielsweise könnte eine (nicht dargestellte) zentrale Steuereinheit vorgesehen sein, welche mit beiden Schweißgeräten A, B (oder mehreren Schweißgeräten) verbunden ist und über welche die Schweißprozesse der Schweißgeräte A, B gesteuert werden können. Die beschriebenen Schweißgeräte A, B sind natürlich hinlänglich bekannt, weshalb an dieser Stelle nicht mehr näher darauf eingegangen wird.

Die beiden Schweißbrenner 4A, 4B können örtlich relativ zueinander auch so angeordnet werden, dass diese Schweißdrähte 3A, 3B in zwei getrennte Schmelzbäder arbeiten anstatt in ein gemeinsames Schmelzbad 15 am Werkstück 6, wie in Fig.1 dargestellt. Diese Anordnung zueinander kann fix sein, beispielsweise in dem beide Schweißbrenner 4A, 4B an einem (nicht dargestellten) Schweißroboter angeordnet werden, der beide Schweißbrenner 4A, 4B führt. Die Anordnung kann aber auch veränderlich sein, beispielsweise in dem je ein Schweißbrenner 4A, 4B von einem Schweißroboter geführt wird. Anstatt eines Schweißroboters kann natürlich auch eine andere geeignete Manipulationsvorrichtung vorgesehen sein, beispielsweise eine Art Portalkran, der vorzugsweise eine Bewegung in mehreren, vorzugsweise drei Achsen ermöglicht. Es könnte aber auch ein gemeinsamer Schweißbrenner für beide Schweißdrähte 3A, 3B vorgesehen sein, wie in Fig.1 gestrichelt angedeutet ist. Es ist dabei unerheblich, ob mit den Schweißbrennern 4A, 4B ein Verbindungsschweißen oder ein Auftragsschweißen, oder ein sonstiges Schweißverfahren, realisiert wird. Natürlich wäre auch ein manuelles Schweißen per Hand möglich.

Die Schweißgeräte A, B sind mittels einer Kommunikationsverbindung 11 verbunden, über die eine Synchronisationsinformation Y wechselseitig zwischen den Schweißgeräten A, B ausgetauscht werden kann. Die Kommunikationsverbindung 11 kann beispielsweise eine drahtgebundene oder drahtlose Verbindung zwischen den Steuereinheiten 9A, 9B oder zwischen den Benutzerschnittstellen 10A, 10B sein. Üblicherweise wird bei einem Mehrfach-Schweißverfahren eine Elektrode als Führungselektrode vorgesehen und die jeweils andere (oder anderen) Elektrode/n werden als sogenannte Nachlaufelektroden vorgesehen. Oftmals wird die Elektrode, die in Schweißrichtung, also in Bewegungsrichtung der Schweißbrenner (oder des gemeinsamen Schweißbrenners) vorne angeordnet ist als Führungselektrode gewählt und die in Schweißrichtung dahinter angeordnete Elektrode als Nachlaufelektrode. Die Auswahl der Führungselektrode und der Nachlaufelektrode kann beispielsweise vor Beginn des Mehrfach-Schweißverfahrens manuell von einem Benutzer eingestellt werden, z.B. über die Benutzerschnittstellen 10A, 10B oder eine gemeinsame Benutzerschnittstelle, kann aber auch fest vorgegeben sein. Wenn z.B. ein Schweißroboter für ein Schweißgerät A, B vorgesehen ist, kann das jeweilige Schweißgerät A, B über eine geeignete Schnittstelle mit der Steuerungseinheit des Schweißroboters verbunden sein. Die Bedienung des Schweißgeräts A, B und auch die Wahl der Führungselektrode und der Nachlaufelektrode kann dann beispielsweise über eine Benutzerschnittstelle des Schweißroboters erfolgen. Auch eine Änderung der Zuordnung von Führungselektrode und Nachlaufelektrode während des Schweißens ist nicht ausgeschlossen und könnte beispielsweise automatisch erfolgen, z.B. bei einer Richtungsänderung der Schweißbewegung eines Schweißbrenners 4A, 4B. Auch eine automatische Zuordnung von Führungselektrode und Nachlaufelektrode wäre möglich. Beispielsweise könnten die Schweißgeräte A, B und/oder die Schweißroboter, die die Schweißbrenner 4A, 4B bewegen miteinander über eine geeignete Kommunikationsverbindung kommunizieren und an eine zentrale Steuerungseinheit angeschlossen sein. Die Festlegung der Führungselektrode und Nachlaufelektrode könnte beispielsweise in Abhängigkeit eines in einer zentralen Steuerungseinheit implementierten Programms selbstständig erfolgen, beispielsweise in Abhängigkeit von bestimmten Parametern, wie z.B. der Positionen der Schweißbrenner 4A, 4B, etc. Im dargestellten Beispiel ist der Schweißdraht 3A (als abschmelzende Elektrode) als Führungselektrode festgelegt und der Schweißdraht 3B (als abschmelzende Elektrode) ist als Nachlaufelektrode festgelegt. Natürlich wäre es aber auch umgekehrt möglich. Beispielsweise könnte eine automatische Festlegung der Führungselektrode erfolgen, indem die Steuerungseinheit 9A, 9B eines Schweißgeräts A, B, die ein gewähltes oder voreingestelltes Schweißprogramm zuerst geladen hat den Schweißdraht 3A, 3B des jeweiligen Schweißgeräts A, B als Führungselektrode festlegt. Die entsprechende Steuerungseinheit 9A, 9B kann dann ein Synchronisationssignal Y an die Steuereinheit 9A, 9B des jeweils anderen Schweißgeräts A, B senden und diese legt den entsprechenden Schweißdraht 3A, 3B als Nachlaufelektrode fest.

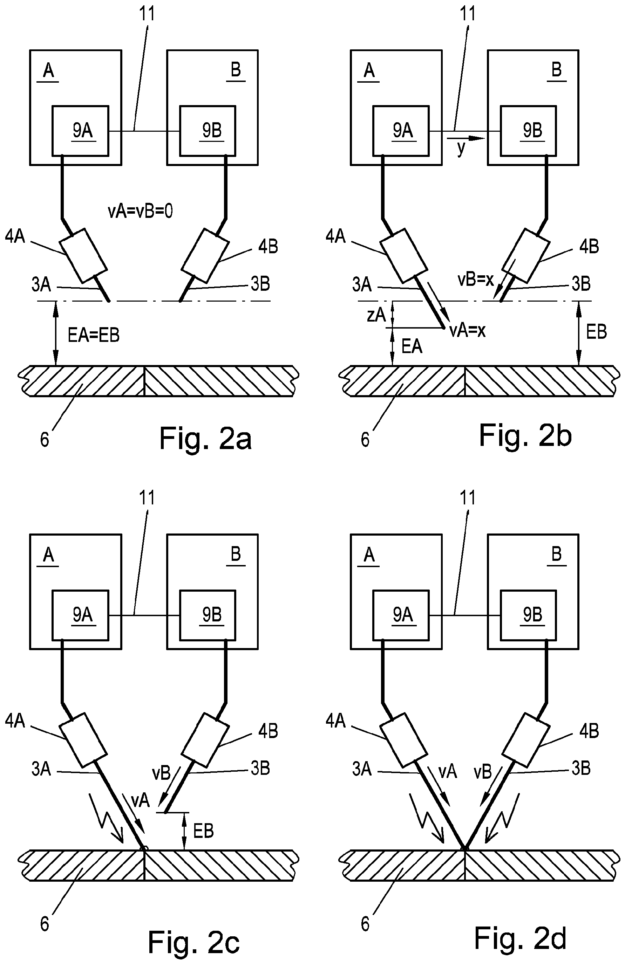

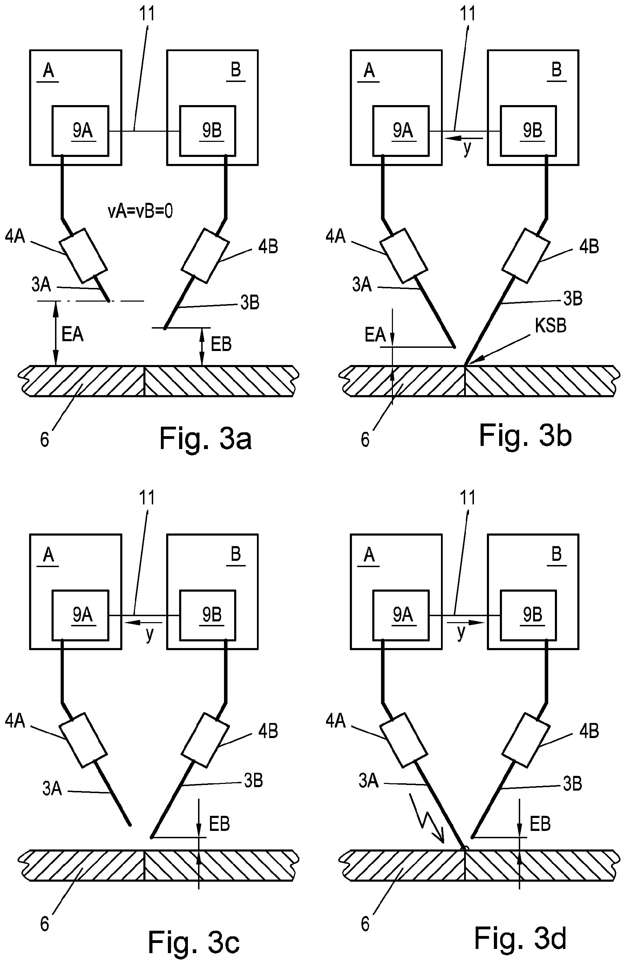

Um einen definierten und möglichst konstant reproduzierbaren Startvorgang des Mehrfach-Schweißverfahrens sicherzustellen ist vorgesehen, dass die Steuereinheit der Führungselektrode (hier die Steuereinheit 9A) einen Schweißdrahtvorschub der Führungselektrode startet und ein Synchronisationssignal Y an die Steuereinheit der Nachlaufelektrode (hier Steuereinheit 9B) sendet, wenn die Führungselektrode eine festgelegte Wegstrecke zA oder eine festgelegte Zeit tA bewegt wurde und dass die Steuereinheit 9B der Nachlaufelektrode einen Schweißdrahtvorschub der Nachlaufelektrode in Abhängigkeit des erhaltenen Synchronisationssignals Y startet, wie nachfolgend anhand Fig.2a-2d und Fig.3a-3c näher erläutert wird.

In den Fig.2a-2d ist ein beispielhafter Ablauf des Startvorgangs des Mehrfach-Schweißverfahrens dargestellt. Die Schweißanordnung 1 entspricht im Wesentlichen jener wie in Fig. 1, ist aber vereinfacht schematisch dargestellt. In Fig.2a ist die Schweißanordnung 1 in einer Ausgangsposition dargestellt, in der die Schweißdrähte 3A, 3B vorzugsweise in einem gleich großen Elektrodenabstand EA=EB vom Werkstück 6 entfernt sind und eine Schweißdrahtvorschubgeschwindigkeit vA=vB=0 aufweisen. Beispielsweise kann der gleiche Elektrodenabstand EA=EB erreicht werden, indem die Schweißdrähte 3A, 3B manuell mit einem geeigneten Werkzeug auf eine gleiche Länge eingestellt werden. Es könnte aber beispielsweise auch ein bestimmter vorgegebener oder einstellbarer initialer Elektrodenabstand EA, EB automatisch von den Steuereinheiten 9A, 9B eingestellt werden. Dies ist aber nicht zwingend notwendig, sondern es könnten auch verschiedene Elektrodenabstände EA ≠ EB vorgesehen sein, wie nachfolgend anhand Fig.3a-3c noch näher erläutert wird. Vorzugsweise werden die Schweißdrahtvorschubeinheiten 14A, 14B aber so gesteuert, dass die Schweißdrähte 3A, 3B am Ende jedes Mehrfach-Schweißprozesses (z.B. am Ende einer Schweißnaht) eine gleiche Länge aufweisen.

In der in Fig.2a gezeigten Ausgangsposition wird nun zuerst der Schweißdrahtvorschub der Führungselektrode, hier des Schweißdrahts 3A gestartet. Dazu wird die Schweißdrahtvorschubeinheit 14A (nicht dargestellt) von der Steuereinheit 9A angesteuert, um den Schweißdraht 3A mit einer bestimmten vorgegebenen oder einstellbaren Schweißdrahtvorschubgeschwindigkeit vA in Richtung des Werkstücks 6 zu bewegen. Die Nachlaufelektrode, hier der Schweißdraht 3B steht dabei still, also mit Schweißdrahtvorschubeinheit vB=0. Nachdem die Führungselektrode bzw. der Schweißdraht 3A eine bestimmte vorgegebene oder einstellbare Wegstrecke zA oder Zeit tA bewegt wurde, übermittelt die Steuereinheit 9A des Schweißgeräts A der Führungselektrode ein Synchronisationssignal Y über die Datenkommunikationsverbindung 11 an die Steuereinheit 9B des Schweißgeräts B der Nachlaufelektrode, wie in Fig.2b dargestellt ist. Die Steuereinheit 9B verarbeitet das erhaltene Synchronisationssignal Y und startet den Schweißdrahtvorschub der Nachlaufelektrode, hier des Schweißdrahts 3B, in Abhängigkeit des Synchronisationssignal Y mit einer bestimmten vorgegebenen oder einstellbaren Schweißdrahtvorschubgeschwindigkeit vB. In einer einfachen Ausgestaltung der Datenkommunikationsverbindung 11 kann das Synchronisationssignal Y beispielsweise ein Synchronisationspuls in Form eines Strom- oder Spannungspulses sein. Wenn die Datenkommunikationsverbindung 11 als Datenbus ausgebildet ist, kann das Synchronisationssignal Y beispielsweise auch eine entsprechende Busnachricht sein.

Beispielsweise kann die Steuereinheit 9B unmittelbar bei Erhalt des Synchronisationssignals Y den Schweißdrahtvorschub des Schweißdrahts 3B starten (ohne dass der Schweißdrahtvorschub der Führungselektrode, also des Schweißdrahts 3A, unterbrochen wird). Beispielsweise könnte der Schweißdraht 3B mit einer Schweißdrahtvorschubgeschwindigkeit vB=vA in Richtung des Werkstücks 6 bewegt werden oder aber auch mit einer von der Führungselektrode verschiedenen Schweißdrahtvorschubgeschwindigkeit vB≠vA. Die Wegstrecke zA kann beispielsweise von der Steuereinheit 9A aus der Schweißdrahtvorschubgeschwindigkeit vA und der Zeit tA ermittelt werden. Natürlich könnte aber auch eine separate Messeinrichtung, beispielsweise ein geeigneter Sensor, vorgesehen sein, um eine bestimmte zurückgelegte Wegstrecke zA zu detektieren.

Wie in Fig.2b dargestellt ist, ist die Führungselektrode, hier der Schweißdraht 3A, zum Zeitpunkt wenn das Synchronisationssignal Y an die Steuereinheit 9B gesendet wird in einem Elektrodenabstand EA vom Werkstück 6 entfernt, der kleiner ist als der Elektrodenabstand EB der Nachlaufelektrode, hier des Schweißdrahts 3B (EA < EB). Wenn der Schweißdrahtvorschub der Nachlaufelektrode bzw. des Schweißdrahts 3B unmittelbar bei Erhalt des Synchronisationssignals Y gestartet wird, werden beide Schweißdrähte 3A, 3B nunmehr gleichzeitig in Richtung des Werkstücks 6 bewegt, vorzugsweise mit gleicher Schweißdrahtvorschubgeschwindigkeit vB=vA, wie in Fig.2b angedeutet ist. Der Schweißdraht 3A bzw. die Führungselektrode eilt damit im Wesentlichen mit einem zeitlichen Vorsprung von tA bzw. dem Vorsprung der Wegstrecke zA dem Schweißdraht 3B bzw. der Nachlaufelektrode voraus.

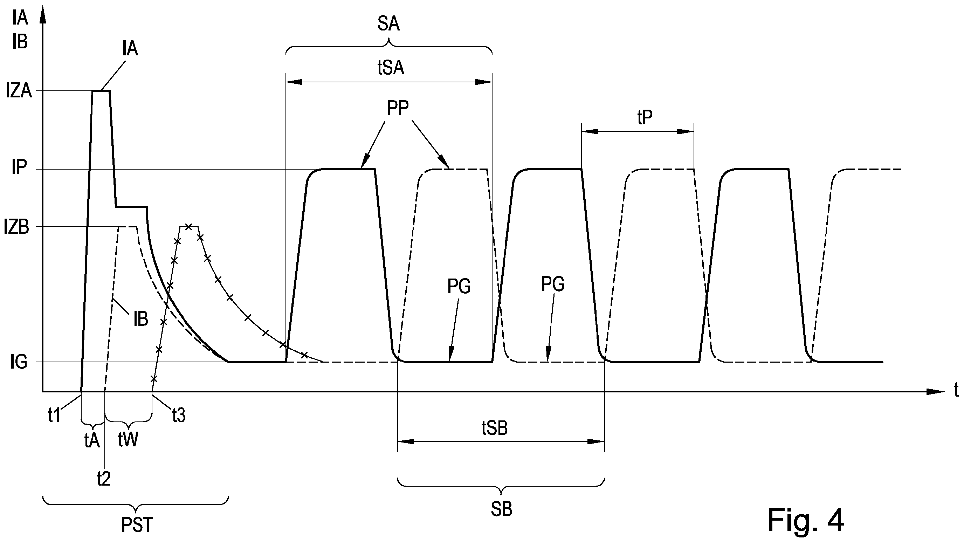

Wie in Fig.2c dargestellt, kontaktiert der Schweißdraht 3A das Werkstück 6 zuerst, also vor dem Schweißdraht 3B, wobei der Elektrodenabstand EB der Nachlaufelektrode bzw. des Schweißdrahts 3B dabei der in Fig.2b dargestellten zurückgelegten Wegstrecke zA der Führungselektrode entspricht (bei gleichen Schweißdrahtvorschubgeschwindigkeiten vA=vB). Bei Kontakt des Schweißdrahts 3A mit dem Werkstück 6wird ein Lichtbogen zwischen dem Schweißdraht 3A und dem Werkstück 6 gezündet, wie durch den Blitz angedeutet ist. Beispielsweise wird dazu von der Steuereinheit 9A durch einen abrupten Anstieg des Schweißstroms IA ein Kurzschluss im Schweißstromkreis des Schweißgeräts A erkannt (Startphase PST in Fig.4), worauf die Steuereinheit 9A nach der Startphase PST die Schweißparamater des entsprechend durchzuführenden Schweißprozesses einstellt, insbesondere regelt. Im Falle eines Impulsschweißprozesses sind dies beispielsweise periodische Schweißzyklen mit einem bestimmten Grundstrom IG, Impulsstrom IP, Schweißspannung U, Impulsfrequenz f, Schweißdrahtvorschubgeschwindigkeit v, etc., wie in Fig.4 dargestellt ist. Nach Zündung des Lichtbogens an der Führungselektrode bzw. dem Schweißdraht 3A kann der Schweißdraht 3A dem Schmelzbad 15 unter Umständen auch mit einer anderen Schweißdrahtvorschubgeschwindigkeit vA zugeführt werden, als vor Zündung des Lichtbogens. Insbesondere könnte die Schweißdrahtvorschubgeschwindigkeit vA vor der Zündung beispielsweise geringer sein, als während des Schweißprozesses. Z.B. kann die Schweißdrahtvorschubgeschwindigkeit vA vor der Zündung des Lichtbogens im Bereich von 0,5m/min liegen und nach der Zündung im Bereich von 20m/min.

Während an der Führungselektrode der Lichtbogen gezündet und bereits der entsprechend vorgegebene oder einstellbare Schweißprozess durchgeführt wird, wird die Nachlaufelektrode, hier der Schweißdraht 3B im gezeigten Beispiel weiterhin mit der Schweißdrahtvorschubgeschwindigkeit vB dem Werkstück 6 im Wesentlichen kontinuierlich zugeführt, die wiederum gleich oder verschieden von der Schweißdrahtvorschubgeschwindigkeit vA sein kann. Zum Zeitpunkt in Fig.2d erreicht die Nachlaufelektrode 3B das Werkstück 6 und es wird ebenfalls ein Lichtbogen gezündet, wie durch den zweiten Blitz angedeutet ist. In weiterer Folge stellt auch die Steuereinheit 9B des Schweißgeräts B die Schweißparameter des eingestellten Schweißprozesses ein. Damit werden nun mit beiden Schweißgeräten A, B zwei separate Schweißprozesse parallel durchgeführt.

Im dargestellten Beispiel sind die beiden Schweißbrenner 4A, 4B relativ zueinander so angeordnet, dass die Schweißdrähte 3A, 3B einem gemeinsamen Schmelzbad 15 zugeführt werden. Der Lichtbogen am Schweißdraht 3B kann dadurch bereits vor der Berührung des Werkstücks 6 gezündet werden, wenn der Schweißdraht 3B den bereits zwischen dem Schweißdraht 3A und dem Werkstück 6 brennenden Lichtbogen erreicht. Insbesondere kann dabei der Effekt genutzt werden, dass die den Lichtbogen umgebende Luft vom Lichtbogen der Führungselektrode ionisiert ist, wodurch die nötige Zündenergie des Schweißgeräts B zur Zündung des Lichtbogens am Schweißdraht 3B verringert werden kann. Die Schweißbrenner 4A, 4B können relativ zueinander aber auch so angeordnet sein, dass sich zwei getrennte Schmelzbäder am Werkstück 6 ergeben. Der Lichtbogen zwischen der Nachlaufelektrode bzw. dem Schweißdraht 3B und dem Werkstück 6 wird dann vorzugsweise gezündet, wenn der Schweißdraht 3B das Werkstück 6 berührt, also im Wesentlichen in herkömmlicher Weise, also analog wie bei der Führungselektrode.

Gemäß einer weiteren vorteilhaften Ausgestaltung des Verfahrens erfolgt der Schweißdrahtvorschub der Nachlaufelektrode bzw. des Schweißdrahts 3B nach dem Erhalt des Synchronisationssignals Y nicht wie bisher beschrieben kontinuierlich bzw. ununterbrochen bis zum Kontakt des Schweißdrahts 3B mit dem Lichtbogen der Führungselektrode oder mit dem Werkstück 6. In diesem Fall sendet die Steuereinheit 9A bei Zündung eines Lichtbogens an der Führungselektrode ein Synchronisationssignal Y an die Steuereinheit 9B und der Schweißdrahtvorschub der Nachlaufelektrode wird von der Steuereinheit 9B gestoppt. Danach wird die Nachlaufelektrode bzw. hier der Schweißdraht 3B eine bestimmte vorgegebene oder einstellbare Wartezeit tW in einer Warteposition gehalten. Nach Ablauf der Wartezeit tW startet die Steuereinheit 9B den Schweißdrahtvorschub der Nachlaufelektrode wieder und durch Anlegen eines Schweißstroms IB wird ein Lichtbogen an der Nachlaufelektrode gezündet, wenn die Nachlaufelektrode das Werkstück 6 berührt oder in den vom Lichtbogen der Führungselektrode ionisierten Umgebungsbereich eindringt. Dadurch kann der Lichtbogen an der Nachlaufelektrode um eine beliebige Zeit später gezündet werden als an der Führungselektrode, insbesondere unabhängig von der zurückgelegten Wegstrecke zA oder der Zeit tA, um die die Führungselektrode der Nachlaufelektrode vorauseilt. Die Wartezeit tW könnte beispielsweise an der Benutzerschnittstelle 10B eingestellt werden oder könnte auch in Abhängigkeit eines durchgeführten Schweißprozesses vorgegeben sein. Wenn, wie bereits erwähnt, z.B. ein Schweißroboter vorgesehen ist, der mit dem Schweißgerät A, B über ein geeignete Schnittstelle verbunden ist, könnte die Wartezeit tW beispielsweise auch über die Benutzerschnittstelle des Schweißroboters vorgegeben werden. Natürlich könnte die Steuerung aber auch über eine andere externe Steuerungseinheit erfolgen, die mit dem Schweißgerät A, B verbunden ist. Beispielsweise könnte eine zentrale Steuerungseinheit vorgesehen sein, die mehrere Schweißroboter und mehrere Schweißgeräte steuert.

Wenn beispielsweise eine weitere (nicht dargestellte) Elektrode, z.B. eine zweite Nachlaufelektrode vorgesehen ist, wird das Synchronisationssignal Y natürlich vorzugsweise auch von der Steuereinheit 9A des Schweißgeräts A der Führungselektrode an die Steuereinheit 9N des weiteren Schweißgeräts N übermittelt. Die zweite Nachlaufelektrode kann dann z.B. analog der ersten Nachlaufelektrode (hier Schweißdraht 3B) angesteuert werden. Dadurch könnten die Lichtbogen der ersten und zweiten Nachlaufelektrode beispielsweise im Wesentlichen gleichzeitig gezündet werden und die Schweißprozesse gleichzeitig gestartet werden. Es könnte aber z.B. auch ein weiteres Synchronisationssignal Y von der Steuereinheit 9B des Schweißgeräts B an die Steuereinheit 9N des weiteren Schweißgeräts N gesendet werden und der Schweißdrahtvorschub der zweiten Nachlaufelektrode (Schweißdraht 3N) könnte wiederum erst in Abhängigkeit des erhaltenen Synchronisationssignals Y des Schweißgeräts B der ersten Nachlaufelektrode gestartet werden. Dadurch würden die drei Schweißprozesse hintereinander mit bestimmten zeitlichen Abständen gestartet werden. Natürlich könnte auch bei der zweiten Nachlaufelektrode wiederum eine Wartezeit tW vorgesehen sein, um die die zweite Nachlaufelektrode nach dem Zünden des Lichtbogens an der ersten Nachlaufelektrode in einer Warteposition gehalten wird. Vorzugsweise werden die Schweißbrenner 4A, 4B, ...4N während des Startvorgangs nicht relativ zueinander und vorteilhafterweise auch nicht (oder nur sehr langsam) relativ zum Werkstück 6 bewegt, um einen kontrollierten und reproduzierbaren Materialauftrag zu gewährleisten.

In Fig.3a-3c ist eine weitere Variante des Startvorgangs des Mehrfach-Schweißverfahrens dargestellt. In Fig.3a ist die Schweißanordnung 1 wiederum in der Ausgangsposition zu Beginn des Schweißverfahrens dargestellt. Im Unterschied zu Fig.2a zuvor, weisen die Führungselektrode (Schweißdrähte 3A) und Nachlaufelektrode 3B (Schweißdraht 3B) allerdings unterschiedliche Elektrodenabstände EA, EB auf. Insbesondere befindet sich die Nachlaufelektrode näher am Werkstück 6, weist also einen geringeren Elektrodenabstand EB auf (EB<EA). Der Startvorgang erfolgt nun im Wesentlichen unverändert wie zuvor, indem die Steuereinheit 9A den Schweißdrahtvorschub der Führungselektrode startet. Nach Ablauf einer bestimmten Zeit tA oder Zurücklegen einer bestimmten Wegstrecke zA wird das Synchronisationssignal Y wie zuvor von der Steuereinheit 9A an die Steuereinheit 9B des zweiten Schweißgeräts B gesendet. Unter Umständen kann es nun trotz des früheren Starts des Schweißdrahtvorschubs der Führungselektrode dazu kommen, dass die Nachlaufelektrode das Werkstück zuerst kontaktiert, also vor der Führungselektrode. Dies ist insbesondere dann der Fall, wenn die Differenz zwischen den Elektrodenabständen EA, EB in der Ausgangsposition größer ist als die eingestellte oder vorgegebene Wegstrecke zA, um welche die Führungselektrode der Nachlaufelektrode vorauseilt.

Zum Zeitpunkt, der in Fig.3b dargestellt ist, hat sich aufgrund der vorauseilenden Führungselektrode zwar die Differenz zwischen den Elektrodenabständen EA, EB verringert, allerdings berührt die Nachlaufelektrode das Werkstück 6 trotzdem vor der Führungselektrode. Da dies in der Regel unerwünscht ist, wird in diesem Fall kein Lichtbogen an der Nachlaufelektrode bzw. dem Schweißdraht 3B gezündet. Die Steuereinheit 9B detektiert bei Berührung des Schweißdrahts 3B einen Kurzschluss im Schweißstromkreis des Schweißgeräts B, stoppt den Schweißdrahtvorschub des Schweißdrahts 3B und sendet ein Synchronisationssignal Y an die Steuereinheit 9A. Die Steuereinheit 9A stoppt bei Erhalt des Synchronisationssignals Y im Wesentlichen unmittelbar den Schweißdrahtvorschub der Führungselektrode bzw. des Schweißdrahts 3A.

Damit werden die Schweißdrahtvorschübe der Führungselektrode und der Nachlaufelektrode im Wesentlichen zeitgleich gestoppt. Danach wird die Schweißdrahtvorschubeinheit 14B der Nachlaufelektrode von der Steuereinheit 9B so angesteuert, dass der Schweißdraht 3B auf einen bestimmten vorgegebenen oder einstellbaren Elektrodenabstand EB vom Werkstück 6 weg bewegt wird, beispielsweise auf einen vorgegebenen initialen Elektrodenabstand EB von beispielsweise 0,1-1mm, so wie in Fig.3c dargestellt ist. Wenn dieser Elektrodenabstand EB erreicht ist, sendet die Steuereinheit 9B der Nachlaufelektrode ein Synchronisationssignal Y an die Steuereinheit 9A der Führungselektrode. Die Steuereinheit 9A startet bei Erhalt des Synchronisationssignals Y den Schweißdrahtvorschub der Führungselektrode bzw. des Schweißdrahts 3A und zündet einen Lichtbogen wenn die Führungselektrode das Werkstück 6 berührt, wie in Fig.3d durch den Blitz dargestellt ist. Bei Zündung des Lichtbogens sendet die Steuereinheit 9A der Führungselektrode wiederum ein Synchronisationssignal Y an die Steuereinheit 9B der Nachlaufelektrode. In Abhängigkeit des eingestellten Elektrodenabstands EB kann die Steuereinheit 9B der Nachlaufelektrode direkt einen Lichtbogen an der Nachlaufelektrode zünden oder die Nachlaufelektrode bzw. der Schweißdraht 3B wird zuerst in Richtung des Werkstücks 6 bewegt und der Lichtbogen wird bei Berührung des Werkstücks 6 gezündet (oder wenn der Schweißdraht 3B in den vom Lichtbogen der Führungselektrode ionisierten Umgebungsbereich der Führungselektrode eindringt). Natürlich könnte auch wieder eine Wartezeit tW vorgesehen sein und die Nachlaufelektrode könnte bei Erhalt des Synchronisationssignal Y erst nach Ablauf der Wartezeit tW den Lichtbogen zünden und/oder den Schweißdrahtvorschub starten.

Alternativ könnte die vorteilhafte Ausgangsposition gemäß Fig.2a auch hergestellt werden, indem nach dem Berühren des Werkstücks und dem Erkennen des Kurzschlusses KS an der Nachlaufelektrode (Fig.3b) die Schweißdrahtvorschübe beider Schweißdrähte 3A, 3B gestoppt werden und die Schweißdrähte 3A, 3B manuell auf gleiche Länge abgelängt werden, ohne dass ein automatisches Zurückbewegen der Nachlaufelektrode durch die Steuereinheit 9B durchgeführt wird. Der Startvorgang kann dann wieder so durchgeführt werden, wie anhand der Fig.2a-2d beschrieben wurde.

Gemäß einer weiteren Ausführungsform des Verfahrens ist vorgesehen, dass wenn die Nachlaufelektrode (hier der Schweißdraht 3B) das Werkstück 6 vor der Führungselektrode (Schweißdraht 3A) berührt (analog Fig.3b), die Nachlaufelektrode bzw. der Schweißdraht 3B als Führungselektrode festgelegt wird und die Führungselektrode bzw. der Schweißdraht 3A als Nachlaufelektrode festgelegt wird. Es wird also im Wesentlichen die Zuordnung von Führungselektrode und Nachlaufelektrode zu den Schweißdrähten 3A, 3B vertauscht. An der Führungselektrode (nunmehr Schweißdraht 3B) wird dann ein Lichtbogen gezündet sobald der Schweißdraht 3B das Werkstück 6 berührt. Die Nachlaufelektrode (nunmehr Schweißdraht 3A) wird währenddessen in Richtung des Werkstücks 6 bewegt und es wird ein Lichtbogen an der Nachlaufelektrode gezündet, wenn die Nachlaufelektrode (der Schweißdraht 3A) das Werkstück 6 berührt oder in den vom Lichtbogen der Führungselektrode (Schweißdraht 3B) ionisierten Umgebungsbereich eindringt. Dadurch kann der Startvorgang des Mehrfach-Schweißverfahrens beschleunigt werden, was beispielsweise bei Anwendungen vorteilhaft ist, bei denen die Zuordnung von Führungselektrode und Nachlaufelektrode unkritisch ist. Vorzugsweise kann der Modus des Startvorgangs für den Fall wenn die Nachlaufelektrode das Werkstück 6 zuerst berührt über die Benutzerschnittstellen 10A, 10B an den Schweißgeräten A, B oder über eine zentrale Steuereinheit ausgewählt werden. Der entsprechende Modus kann natürlich auch voreingestellt sein.

In Fig.4 sind Verläufe des Schweißstroms IA der Führungselektrode des Schweißstroms IB der Nachlaufelektrode in einem Diagramm über der Zeit t dargestellt. In diesem Beispiel wird mit beiden Schweißgeräten A, B jeweils ein Impulsschweißprozess durchgeführt, natürlich könnten aber auch andere bekannte Schweißprozesse durchgeführt werden, beispielsweise ein Kurzlichtbogenschweißprozess, Sprühlichtbogenschweißprozess, Schweißprozess mit reversierendem Schweißdrahtvorschub (sogenannter Kalt-Metall-Transfer-Schweißprozess), etc. Es wäre auch denkbar, dass verschiedene Schweißprozesse kombiniert werden, also z.B. ein Impulsschweißprozess mit der Führungselektrode und ein Sprühlichtbogenschweißprozess mit der Nachlaufelektrode durchgeführt wird. Die verschiedenen Schweißprozesse sind dem Fachmann bekannt. Die durchgezogene Linie stellt den Verlauf des Schweißstroms IA der Führungselektrode (Schweißgerät A) dar, die gestrichelte Linie (und die mit Markern versehene Linie) den Verlauf des Schweißstroms IB der Nachlaufelektrode (Schweißgerät B).

Während des beispielhaft dargestellten Impulsschweißens wechseln sich ein Grundstrom IG und ein demgegenüber erhöhter Impulsstrom IP periodisch mit einer vorgegebenen Impulsfrequenz f ab. Die Impulsfrequenz f ergibt sich als Kehrwert der Periodendauer tSA, tSB eines Schweißzyklus SA, SB bestehend aus einer Impulsstromphase PP mit dem Impulsstrom IP und einer Grundstromphase PG mit dem Grundstrom IG. Vorzugsweise wird während der Impulsstromphase PP jeweils ein Schweißtropfen in das Schmelzbad 15 abgelöst. Während einer Schweißung kann sich die Impulsfrequenz f und/oder der Wert des Grundstromes IG oder Impulsstromes IP auch ändern. Die zeitlichen Verläufe der Schweißströme IG, IP sind in Fig.4 natürlich idealisiert und vereinfacht dargestellt. Oftmals sind in der Grundstromphase PG (nicht dargestellte) kurze Zwischenstromimpulse vorgesehen, um die Prozessstabilität zu erhöhen. Das ändert aber nichts an der Periodendauer tSA, tSB eines Schweißzyklus SA, SB und an der sich daraus ergebenden Impulsfrequenz fA, fB.

In Abhängigkeit vom Drahtdurchmesser und Elektrodenwerkstoff werden die Schweißdrahtvorschubgeschwindigkeit vA, vB, die Schweißströme IA, IB, die Grundstrom-und Pulsstromdauern und die Impulsfrequenz fA, fB des jeweiligen Impulsschweißprozesses vorzugsweise so aufeinander abgestimmt, dass bei jedem Stromimpuls ein Tropfen erzeugt und abgelöst wird. Schweißdrahtvorschubgeschwindigkeit vA, vB und Impulsfrequenz fA, fB sind dabei in der Regel voneinander abhängig. Der Einfachheit halber sind die Verläufe der Schweißströme IA, IB in Fig.4 im Wesentlichen identisch dargestellt, mit gleich großen Grundströmen IGA=IGB und Impulsströmen IPA=IPB und lediglich um eine bestimmte Phasenverschiebung tP zeitlich verschoben. Die Verläufe könnten sich aber natürlich auch unterscheiden, insbesondere können unterschiedliche Impulsfrequenzen fA, fB, unterschiedliche hohe Schweißströme IA, IB oder Pulsdauern vorgesehen sein. Ebenso kann natürlich auch eine andere Phasenverschiebung tP, natürlich auch keine Phasenverschiebung tP, vorgesehen sein.

Wenn statt zweier unabhängiger Schweißprozesse mit getrennten Schmelzbädern beispielsweise ein Mehrfach-Impulsschweißprozess verwendet wird, bei dem beide Schweißdrähte 3a, 3b in ein gemeinsames Schmelzbad 15 arbeiten (so wie in Fig.1 dargestellt), sind die beiden Impulsschweißprozesse vorteilhafterweise aufeinander synchronisiert. Vorzugsweise stehen dann die Impulsfrequenzen fA=1/tSA, fB=1/tSB der beiden Impulsschweißprozesse in einem bestimmten vorgegebenen Bezug zueinander und die ergebenden Schweißzyklen SA, SB haben einen bestimmten vorgegebenen Phasenbezug zueinander. Vorzugsweise gilt, dass die Impulsfrequenz fA, fB in einem ganzzahligen Verhältnis zueinander stehen.

In einer Startphase PST erfolgt der Startvorgang des Mehrfach-Schweißprozesses, wie bereits ausführlich anhand Fig.2a-2d beschrieben wurde, weshalb hier nicht mehr näher darauf eingegangen wird. Zum Zeitpunkt t1 berührt die Führungselektrode, hier der Schweißdraht 3A das Werkstück 6 (siehe Fig.2c). Bei der Zündung des Lichtbogens steigt der Schweißstrom IA rasch auf einen Zündstrom IZA an und der Schweißprozess, hier der Impulsschweißprozess, wird in bekannter Weise gestartet, indem die Steuereinheit 9A nach der Startphase PST die Schweißparameter des Impulsschweißprozesses einstellt, insbesondere einregelt (Schweißstrom IA, Schweißspannung UA, Schweißdrahtvorschubgeschwindigkeit vA, Impulsfrequenz fA, etc.). Dazu kann die Steuereinheit 9A ggf. eine oder mehrere Messgrößen des Schweißprozesses als Istwerte erfassen, beispielsweise die Schweißspannung UA, den Schweißstrom IA, einen Schweißwiderstand, etc. Durch den im Vergleich zum Grundstrom IG und Impulsstrom IP höheren Zündstrom IZA wird die Zündung des Lichtbogens unterstützt, um den Lichtbogen auf eine gewisse Lichtbogenlänge zu stabilisieren. Bei einer schlechten oder unzureichenden Zündung des Lichtbogens an der Führungselektrode wird vorzugsweise keine Freigabe zur Zündung an die Nachlaufelektrode erteilt. Dazu kann beispielsweise ein entsprechendes Synchronisationssignal Y von der Steuereinheit 9A der Führungselektrode an die Steuereinheit 9B der Nachlaufelektrode gesendet werden.

Da die Führungselektrode der Nachlaufelektrode um die Wegstrecke zA oder die Zeit tA vorauseilt, dringt die Nachlaufelektrode, hier der Schweißdraht 3B, in einen den Lichtbogen der Führungselektrode umgebenden ionisierten Umgebungsbereich zum Zeitpunkt t2 erst um die Zeit zA zeitverzögert ein. Die Steuereinheit 9B muss in diesem Fall keinen Kurzschluss detektieren, sondern die Zündung des Lichtbogens an der Nachlaufelektrode wird bereits bei Leerlauf-Schweißspannung des Schweißgeräts B im Wesentlichen automatisch gestartet. Nach Zündung des Lichtbogens kann der vorgegebene Schweißprozess durchgeführt werden, hier ein Impulsschweißprozess analog wie bei der Führungselektrode. Die Schweißparameter des Impulsschweißprozesses der Nachlaufelektrode (Schweißstrom IB, Schweißspannung UB, Schweißdrahtvorschubgeschwindigkeit vB, Impulsfrequenz fB, etc.) werden folglich von der Steuereinheit 9B eingestellt bzw. insbesondere eingeregelt, wie durch die gestrichelte Linie in Fig.4 dargestellt ist. Da die, den Lichtbogen der Führungselektrode umgebende Luft durch die Energie des Lichtbogens ionisiert wird, ist zur Zündung der Nachlaufelektrode eine geringere Zündenergie erforderlich, wie am geringeren Zündstrom IZB ersichtlich ist. Wenn die Führungselektrode und die Nachlaufelektrode keinem gemeinsamen Schmelzbad 15 zugeführt werden, sondern jeweils in ein eigenes Schmelzbad (nicht dargestellt), erfolgt die Zündung an der Nachlaufelektrode vorzugsweise bei Berührung des Werkstücks, im Wesentlichen herkömmlich, analog wie an der Führungselektrode, beispielsweise nach Detektion eines Kurzschlusses im Schweißstromkreis des Schweißgeräts B.

Wie bereits beschrieben, könnte aber auch eine bestimmte vorgegebene oder einstellbare Wartezeit tW vorgesehen sein, während der die Nachlaufelektrode von der Steuereinheit 9B in einer Warteposition gehalten wird. Im dargestellten Beispiel ist dies durch Linie mit den Markern in der Startphase PST angedeutet. Das bedeutet, dass nach dem Zünden des Lichtbogens an der Führungselektrode zum Zeitpunkt t1 die Nachlaufelektrode nicht wie zuvor im Wesentlichen kontinuierlich und ununterbrochen in Richtung des Werkstücks 6 bewegt wird. Die Steuereinheit 9A der Führungselektrode sendet in diesem Fall bei Zündung des Lichtbogens an der Führungselektrode ein Synchronisationssignal Y an die Steuereinheit 9B der Nachlaufelektrode, worauf die Steuereinheit 9B den Schweißdrahtvorschub der Nachlaufelektrode stoppt. Nach Ablauf der vorgegebenen oder einstellbaren Wartezeit tW setzt die Steuereinheit 9B den Schweißdrahtvorschub der Nachlaufelektrode fort die Nachlaufelektrode die den Lichtbogen der Führungselektrode umgebende ionisierte Luft (oder das Werkstück 6) berührt, worauf ein Lichtbogen an der Nachlaufelektrode gezündet und der entsprechende Schweißprozess durchgeführt wird. Die gesamte Zeit zwischen der Zündung des Lichtbogens an der Führungselektrode (Schweißdraht 3A) und der Zündung des Lichtbogens an der Nachlaufelektrode (Schweißdraht 3B) setzt sich damit aus der Zeit tA (um die Führungselektrode der Nachlaufelektrode vorauseilt) und der Wartezeit tW zusammen, wie in Fig.4 dargestellt ist. Dadurch kann der Startvorgang flexibler gestaltet werden. Insbesondere ist dies bei mehreren Nachlaufelektroden vorteilhaft, da der Beginn der Zündung des Lichtbogens der jeweiligen Nachlaufelektrode beispielsweise individuell eingestellt werden kann. Grundsätzlich wäre aber auch eine frühere Zündung des Lichtbogens an der Nachlaufelektrode möglich, beispielsweise im Wesentlichen zeitgleich oder kurz nach der Zündung der Führungselektrode (Zeitpunkt t1 in Fig.4), sofern die Ionisierungsenergie der Führungselektrode ausreicht. Allerdings würde dies zu einer relativ langen Lichtbogenlänge an der Nachlaufelektrode führen, was unter Umständen unerwünscht ist.

## Patentansprüche

1. Verfahren zur Durchführung eines Mehrfach-Schweißverfahrens, bei dem mit zumindest zwei Schweißdrähten (3A, 3B) als abschmelzende Elektroden an einem Werkstück (6) jeweils ein Schweißprozess durchgeführt wird, wobei ein erster Schweißdraht (3A) als Führungselektrode vorgesehen wird und der zumindest eine weitere Schweißdraht (3B) als Nachlaufelektrode vorgesehen wird, wobei die Schweißprozesse der Führungselektrode und der Nachlaufelektrode jeweils von einer Steuereinheit (9A, 9B) gesteuert werden, wobei ein Startvorgang des Mehrfach-Schweißverfahrens durchgeführt wird, indem die Steuereinheit (9A) der Führungselektrode einen Schweißdrahtvorschub der Führungselektrode startet und ein Synchronisationssignal (Y) an die Steuereinheit (9B) der Nachlaufelektrode sendet, wenn die Führungselektrode eine bestimmte Wegstrecke (zA) oder eine bestimmte Zeit (tA) bewegt wurde, **dadurch gekennzeichnet, dass** die Steuereinheit (9B) der Nachlaufelektrode einen Schweißdrahtvorschub der Nachlaufelektrode in Abhängigkeit des erhaltenen Synchronisationssignals (Y) startet, bevor die Führungselektrode das Werkstück (6) berührt.

2. Verfahren nach Anspruch 1, **dadurch gekennzeichnet, dass** die Führungselektrode das Werkstück (6) vor der Nachlaufelektrode berührt, wobei an der Führungselektrode bei Berührung des Werkstücks (6) ein Lichtbogen gezündet wird und an der Nachlaufelektrode ein Lichtbogen gezündet wird, wenn die Nachlaufelektrode das Werkstück (6) berührt oder in einen vom Lichtbogen der Führungselektrode ionisierten Umgebungsbereich der Führungselektrode eindringt.

3. Verfahren nach Anspruch 1, **dadurch gekennzeichnet, dass** die Nachlaufelektrode das Werkstück (6) vor der Führungselektrode berührt, wobei die Steuereinheit (9B) der Nachlaufelektrode einen Kurschluss (KSB) detektiert und ein Synchronisationssignal (Y) an die Steuereinheit (9A) der Führungselektrode sendet, wobei die Steuereinheit (9A) der Führungselektrode den Schweißdrahtvorschub der Führungselektrode stoppt und die Steuereinheit (9B) der Nachlaufelektrode den Schweißdrahtvorschub der Nachlaufelektrode stoppt, dass die Steuereinheit (9B) der Nachlaufelektrode die Nachlaufelektrode auf einen bestimmten Elektrodenabstand (EB) vom Werkstück (6) weg bewegt und ein Synchronisationssignal (Y) an die Steuereinheit (9A) der Führungselektrode sendet, **dass** die Steuereinheit (9A) der Führungselektrode den Schweißdrahtvorschub der Führungselektrode startet und ein Lichtbogen an der Führungselektrode gezündet wird, wenn die Führungselektrode das Werkstück (6) berührt, wobei die Steuereinheit (9A) der Führungselektrode bei Zündung des Lichtbogens ein Synchronisationssignal (Y) an die Steuereinheit (9B) der Nachlaufelektrode sendet **und dass** die Steuereinheit (9B) der Nachlaufelektrode den Schweißdrahtvorschub der Nachlaufelektrode in Abhängigkeit des erhaltenen Synchronisationssignals (Y) startet, wobei an der Nachlaufelektrode ein Lichtbogen gezündet wird, wenn die Nachlaufelektrode das Werkstück (6) berührt oder in einen vom Lichtbogen der Führungselektrode ionisierten Umgebungsbereich eindringt.

4. Verfahren nach Anspruch 1, **dadurch gekennzeichnet, dass** die Nachlaufelektrode das Werkstück (6) vor der Führungselektrode berührt, wobei die Nachlaufelektrode als Führungselektrode festgelegt wird und die Führungselektrode als Nachlaufelektrode festgelegt wird, dass ein Lichtbogen an der Führungselektrode bei Berührung des Werkstücks (6) gezündet wird und an der Nachlaufelektrode ein Lichtbogen gezündet wird, wenn die Nachlaufelektrode das Werkstück (6) berührt oder in einen vom Lichtbogen der Führungselektrode ionisierten Umgebungsbereich eindringt.

5. Verfahren nach einem der Ansprüche 2 bis 4, **dadurch gekennzeichnet, dass** die Steuereinheit (9A, 9B) der Führungselektrode bei Zündung des Lichtbogens der Führungselektrode ein Synchronisationssignal (Y) an die Steuereinheit (9A, 9B) der Nachlaufelektrode sendet, dass die Steuereinheit (9A, 9B) der Nachlaufelektrode den Schweißdrahtvorschub der Nachlaufelektrode bei Erhalt des Synchronisationssignals (Y) stoppt und die Nachlaufelektrode eine bestimmte Wartezeit (tW) in einer Warteposition gehalten wird und nach Ablauf der Wartezeit (tW) die Steuereinheit (9A, 9B) der Nachlaufelektrode den Schweißdrahtvorschub der Nachlaufelektrode startet, wobei der Lichtbogen an der Nachlaufelektrode gezündet wird, wenn die Nachlaufelektrode das Werkstück (6) berührt oder in den vom Lichtbogen der Führungselektrode ionisierten Umgebungsbereich der Führungselektrode eindringt.

6. Verfahren nach einem der Ansprüche 1 bis 5, **dadurch gekennzeichnet, dass** als Schweißprozess der Führungselektrode und/oder der Nachlaufelektrode ein Impulsschweißprozess, ein Schweißprozess mit reversierendem Schweißdrahtvorschub, ein Sprühlichtbogenschweißprozess oder ein Kurzlichtbogenschweißprozess durchgeführt wird.

7. Verfahren nach einem der Ansprüche 1 bis 6, **dadurch gekennzeichnet, dass** die Führungselektrode und die Nachlaufelektrode einem gemeinsamen Schmelzbad (15) am Werkstück (6) zugeführt werden.

8. Verfahren nach einem der Ansprüche 1 bis 7, **dadurch gekennzeichnet, dass** für die Steuereinheit (9A) der Führungselektrode und die Steuereinheit (9B) der Nachlaufelektrode eine gemeinsame Steuereinheit vorgesehen wird, die den Schweißprozess an der Führungselektrode und den Schweißprozess an der Nachlaufelektrode steuert.

9. Schweißanordnung (1) zur Durchführung eines Mehrfach-Schweißverfahrens an einem Werkstück (6) mit zumindest zwei Schweißgeräten (A, B) zur Durchführung voneinander unabhängiger Schweißprozesse, wobei jedes Schweißgerät einen Schweißdraht (3A, 3B) als abschmelzende Elektrode, eine Schweißdrahtvorschubeinheit (14A, 14B) und eine Steuereinheit (9A, 9B) zur Steuerung des jeweiligen Schweißprozesses aufweist, wobei ein Schweißdraht (3A) als Führungselektrode vorgesehen ist und der zumindest eine übrige Schweißdraht (3B) als Nachlaufelektrode vorgesehen ist, wobei zur Durchführung eines Startvorgangs des Mehrfach-Schweißverfahrens die Steuereinheit (9A) der Führungselektrode dazu ausgebildet ist, die Schweißdrahtvorschubeinheit (14A) des Schweißgeräts (A) der Führungselektrode anzusteuern, um einen Schweißdrahtvorschub der Führungselektrode zu starten und ein Synchronisationssignal (Y) an die Steuereinheit (9B) der Nachlaufelektrode zu senden, wenn die Führungselektrode eine festgelegte Wegstrecke (zA) oder eine festgelegte Zeit (tA) bewegt wurde, **dadurch gekennzeichnet, dass** die Steuereinheit (9B) der Nachlaufelektrode dazu ausgebildet ist, die Schweißdrahtvorschubeinheit (14B) des Schweißgeräts (B) der Nachlaufelektrode anzusteuern, um einen Schweißdrahtvorschub der Nachlaufelektrode in Abhängigkeit des erhaltenen Synchronisationssignals (Y) zu starten, bevor die Führungselektrode das Werkstück (6) berührt.

10. Schweißanordnung (1) nach Anspruch 9, **dadurch gekennzeichnet, dass** die Steuereinheit (9A) der Führungselektrode dazu ausgebildet ist, an der Führungselektrode einen Lichtbogen zu zünden, wenn die Führungselektrode das Werkstück (6) vor der Nachlaufelektrode berührt und dass die Steuereinheit (9B) der Nachlaufelektrode dazu ausgebildet ist, an der Nachlaufelektrode einen Lichtbogen zu zünden, wenn die Nachlaufelektrode das Werkstück (6) berührt oder in einen vom Lichtbogen der Führungselektrode ionisierten Umgebungsbereich der Führungselektrode eindringt.

11. Schweißanordnung (1) nach Anspruch 9, **dadurch gekennzeichnet, dass** die Steuereinheit (9B) der Nachlaufelektrode dazu ausgebildet ist, einen Kurschluss (KSB) zu detektieren und ein Synchronisationssignal (Y) an die Steuereinheit (9A) der Führungselektrode zu senden, wenn die Nachlaufelektrode das Werkstück (6) vor der Führungselektrode berührt, wobei die Steuereinheit (9A) der Führungselektrode dazu ausgebildet ist, bei Erhalt des Synchronisationssignals (Y) die Schweißdrahtvorschubeinheit (14A) des Schweißgeräts (A) der Führungselektrode anzusteuern, um den Schweißdrahtvorschub der Führungselektrode zu stoppen und die Steuereinheit (9B) der Nachlaufelektrode vorgesehen ist, die Schweißdrahtvorschubeinheit (14B) des Schweißgeräts (B) der Nachlaufelektrode anzusteuern, um den Schweißdrahtvorschub der Nachlaufelektrode zu stoppen, **dass** die Steuereinheit (9B) der Nachlaufelektrode dazu ausgebildet ist, die Schweißdrahtvorschubeinheit (14B) des Schweißgeräts (B) der Nachlaufelektrode anzusteuern, um die Nachlaufelektrode auf einen bestimmten Elektrodenabstand (EB) vom Werkstück (6) weg zu bewegen und ein Synchronisationssignal (Y) an die Steuereinheit (9A) der Führungselektrode zu senden, **dass** die Steuereinheit (9A) der Führungselektrode dazu ausgebildet ist, bei Erhalt des Synchronisationssignals (Y) die Schweißdrahtvorschubeinheit (14A) des Schweißgeräts (A) der Führungselektrode anzusteuern, um den Schweißdrahtvorschub der Führungselektrode zu starten und an der Führungselektrode einen Lichtbogen zu zünden, wenn die Führungselektrode das Werkstück (6) berührt, wobei die Steuereinheit (9A) der Führungselektrode dazu ausgebildet ist, bei Zündung des Lichtbogens ein Synchronisationssignal (Y) an die Steuereinheit (9B) der Nachlaufelektrode zu senden **und dass** die Steuereinheit (9B) der Nachlaufelektrode dazu ausgebildet ist, die Schweißdrahtvorschubeinheit (14B) des Schweißgeräts (B) der Nachlaufelektrode anzusteuern, um den Schweißdrahtvorschub der Nachlaufelektrode in Abhängigkeit des erhaltenen Synchronisationssignals (Y) zu starten und an der Nachlaufelektrode einen Lichtbogen zu zünden, wenn die Nachlaufelektrode das Werkstück (6) berührt oder in einen vom Lichtbogen der Führungselektrode ionisierten Umgebungsbereich der Führungselektrode eindringt.

12. Schweißanordnung (1) nach Anspruch 9, **dadurch gekennzeichnet, dass** wenn die Nachlaufelektrode das Werkstück (6) vor der Führungselektrode berührt, die Steuereinheit (9B) des Schweißgeräts (B) der Nachlaufelektrode dazu ausgebildet ist, den Schweißdraht (3B) des Schweißgeräts (B) der Nachlaufelektrode als neue Führungselektrode festzulegen und ein Synchronisationssignal (Y) an die Steuereinheit (9A) des Schweißgeräts (A) der Führungselektrode zu senden, wobei die Steuereinheit (9A) des Schweißgeräts (A) der Führungselektrode dazu ausgebildet ist, bei Erhalt des Synchronisationssignal (Y) den Schweißdraht (3A) des Schweißgeräts (A) als neue Nachlaufelektrode festzulegen, und dass die Steuereinheit (9B) des Schweißgeräts (B) der neuen Führungselektrode dazu ausgebildet ist, bei Berührung des Werkstücks (6) durch den Schweißdraht (3B) der neuen Führungselektrode einen Lichtbogen an der neuen Führungselektrode zu zünden und die Steuereinheit (9A) des Schweißgeräts (A) der neuen Nachlaufelektrode dazu ausgebildet ist, einen Lichtbogen am Schweißdraht (3B) der neuen Nachlaufelektrode zu zünden, wenn die neue Nachlaufelektrode das Werkstück (6) berührt oder in einen vom Lichtbogen der neuen Führungselektrode ionisierten Umgebungsbereich eindringt.

13. Schweißanordnung (1) nach einem der Ansprüche 10 bis 12, **dadurch gekennzeichnet, dass** die Steuereinheit (9A, 9B) der Führungselektrode dazu ausgebildet ist, bei Zündung des Lichtbogens der Führungselektrode ein Synchronisationssignal (Y) an die Steuereinheit (9A, 9B) der Nachlaufelektrode zu senden, wobei die Steuereinheit (9A, 9B) der Nachlaufelektrode dazu ausgebildet ist, bei Erhalt des Synchronisationssignals (Y) die Schweißdrahtvorschubeinheit (14A, 14B) des Schweißgeräts (A, B) der Nachlaufelektrode anzusteuern, um den Schweißdrahtvorschub der Nachlaufelektrode bei Zündung des Lichtbogens der Führungselektrode zu stoppen, nach Ablauf einer bestimmten Wartezeit (tW) wieder zu starten und einen Lichtbogen an der Nachlaufelektrode zu zünden, wenn die Nachlaufelektrode das Werkstück (6) berührt oder in den vom Lichtbogen der Führungselektrode ionisierten Umgebungsbereich der Führungselektrode eindringt.

14. Schweißanordnung (1) nach einem der Ansprüche 9 bis 13, **dadurch gekennzeichnet, dass** als Schweißprozesse für die Führungselektrode und/oder die Nachlaufelektrode ein Impulsschweißprozess, ein Schweißprozess mit reversierendem Schweißdrahtvorschub, ein Sprühlichtbogenschweißprozess oder ein Kurzlichtbogenschweißprozess vorgesehen sind.

15. Schweißanordnung (1) nach einem der Ansprüche 9 bis 14, **dadurch gekennzeichnet, dass** die Führungselektrode und die Nachlaufelektrode relativ zueinander positioniert sind, um von den Schweißdrahtvorschubeinheiten (14A, 14B) einem gemeinsamen Schmelzbad (15) am Werkstück (6) zugeführt zu werden und/oder dass die Steuereinheit (9A) der Führungselektrode und die Steuereinheit (9B) der Nachlaufelektrode in einer gemeinsamen Steuereinheit integriert sind.

## Claims

1. A method for carrying out a multiple welding process in which a welding process is carried out in each case with at least two welding wires (3A, 3B) as consumable electrodes on a workpiece (6), a first welding wire (3A) being provided as a guide electrode and the at least one other welding wire (3B) being provided as a trailing electrode, the welding processes of the guide electrode and the trailing electrode each being controlled by a control unit (9A, 9B), wherein a starting process of the multiple welding method is carried out in that the control unit (9A) of the guide electrode starts welding-wire advancing of the guide electrode and sends a synchronization signal (Y) to the control unit (9B) of the trailing electrode when the guide electrode has moved a certain distance (zA) or for a certain time (tA), **characterized in that** the control unit (9B) of the trailing electrode starts welding-wire advancing of the trailing electrode in dependence on the received synchronization signal (Y) before the guide electrode touches the workpiece (6).

2. The method according to claim 1, **characterized in that** the guide electrode touches the workpiece (6) before the trailing electrode, an arc being ignited on the guide electrode when the workpiece (6) is touched and an arc being ignited on the trailing electrode when the trailing electrode touches the workpiece (6) or penetrates a region surrounding the guide electrode, which region is ionized by the arc of the guide electrode.

3. The method according to claim 1, **characterized in that** the trailing electrode touches the workpiece (6) before the guide electrode, the control unit (9B) of the trailing electrode detecting a short circuit (KSB) and sending a synchronization signal (Y) to the control unit (9A) of the guide electrode, the control unit (9A) of the guide electrode stopping welding-wire advancing of the guide electrode and the control unit (9B) of the trailing electrode stopping welding-wire advancing of the trailing electrode, **in that** the control unit (9B) of the trailing electrode moves the trailing electrode to a certain electrode distance (EB) away from the workpiece (6) and sends a synchronization signal (Y) to the control unit (9A) of the guide electrode, **in that** the control unit (9A) of the guide electrode starts welding-wire advancing of the guide electrode and an arc is ignited on the guide electrode when the guide electrode touches the workpiece (6), the control unit (9A) of the guide electrode sending a synchronization signal (Y) to the control unit (9B) of the trailing electrode when the arc is ignited, **and in that** the control unit (9B) of the trailing electrode starts welding-wire advancing of the trailing electrode in dependence on the received synchronization signal (Y), an arc being ignited on the trailing electrode when the trailing electrode touches the workpiece (6) or penetrates a surrounding region that is ionized by the arc of the guide electrode.

4. The method according to claim 1, **characterized in that** the trailing electrode touches the workpiece (6) before the guide electrode, wherein the trailing electrode is defined as the guide electrode and the guide electrode is defined as the trailing electrode, **in that** an arc is ignited on the guide electrode when the workpiece (6) is touched and an arc is ignited on the trailing electrode when the trailing electrode touches the workpiece (6) or penetrates a surrounding region that is ionized by the arc of the guide electrode.

5. The method according to any of claims 2 to 4, **characterized in that** the control unit (9A, 9B) of the guide electrode sends a synchronization signal (Y) to the control unit (9A, 9B) of the trailing electrode when the arc of the guide electrode is ignited, **in that** the control unit (9A, 9B) of the trailing electrode stops welding-wire advancing when the synchronization signal (Y) is received and the trailing electrode is held in a waiting position for a certain waiting time (tW) and the control unit (9A, 9B) of the trailing electrode starts welding-wire advancing of the trailing electrode after the waiting time (tW), the arc being ignited on the trailing electrode when the trailing electrode touches the workpiece (6) or penetrates the region surrounding the guide electrode, which region is ionized by the arc of the guide electrode.

6. The method according to any of claims 1 to 5, **characterized in that** a pulse welding process, a welding process having reversing welding-wire advancing, a corona arc welding process or a short arc welding process is carried out as the welding process of the guide electrode and/or the trailing electrode.

7. The method according to any of claims 1 to 6, **characterized in that** the guide electrode and the trailing electrode are fed to a common weld pool (15) on the workpiece (6).

8. The method according to any of claims 1 to 7, **characterized in that** a common control unit is provided for the control unit (9A) of the guide electrode and the control unit (9B) of the trailing electrode, which common control unit controls the welding process on the guide electrode and the welding process on the trailing electrode.

9. A welding arrangement (1) for carrying out a multiple welding method on a workpiece (6) having at least two welding devices (A, B) for carrying out mutually independent welding processes, each welding device having a welding wire (3A, 3B) as a consumable electrode, a welding-wire advancing unit (14A, 14B) and a control unit (9A, 9B) for controlling the respective welding process, a welding wire (3A) being provided as a guide electrode and the at least one remaining welding wire (3B) being provided as a trailing electrode, wherein for performing a starting process of the multiple welding process, the control unit (9A) of the guide electrode is configured to control the welding-wire advancing unit (14A) of the welding device (A) of the guide electrode in order to start welding-wire advancing of the guide electrode and to send a synchronization signal (Y) to the control unit (9B) of the trailing electrode when the guide electrode moves a specified distance (zA) or for a specified time (tA), **characterized in that** the control unit (9B) of the trailing electrode is configured to control the welding-wire advancing unit (14B) of the welding device (B) of the trailing electrode in order to start welding-wire advancing of the trailing electrode in dependence on the received synchronization signal (Y) before the guide electrode touches the workpiece (6).

10. The welding arrangement (1) according to claim 9, **characterized in that** the control unit (9A) of the guide electrode is configured to ignite an arc at the guide electrode when the guide electrode touches the workpiece (6) before the trailing electrode and **in that** the control unit (9B) of the trailing electrode is configured to ignite an arc at the trailing electrode when the trailing electrode touches the workpiece (6) or penetrates a surrounding region of the guide electrode, which region is ionized by the arc of the guide electrode.

11. The welding arrangement (1) according to claim 9, **characterized in that** the control unit (9B) of the trailing electrode is configured to detect a short circuit (KSB) and to send a synchronization signal (Y) to the control unit (9A) of the guide electrode when the trailing electrode touches the workpiece (6) before the guide electrode, the control unit (9A) of the guide electrode being configured to control the welding-wire advancing unit (14A) of the welding device (A) of the guide electrode when the synchronization signal (Y) is received in order to stop welding-wire advancing of the guide electrode and the control unit (9B) of the trailing electrode being provided to control the welding-wire advancing unit (14B) of the welding device (B) of the trailing electrode in order to stop welding-wire advancing of the trailing electrode, **in that** the control unit (9B) of the trailing electrode is configured to control the welding-wire advancing unit (14B) of the welding device (B) of the trailing electrode in order to move the trailing electrode a certain electrode distance (EB) away from the workpiece (6) and to send a synchronization signal (Y) to the control unit (9A) of the guide electrode, **in that** the control unit (9A) of the guide electrode is configured to control the welding-wire advancing unit (14A) of the welding device (A) of the guide electrode when the synchronization signal (Y) is received in order to start welding-wire advancing of the guide electrode and to ignite an arc at the guide electrode when the guide electrode touches the workpiece (6), the control unit (9A) of the guide electrode being configured to send a synchronization signal (Y) to the control unit (9B) of the trailing electrode when the arc is ignited, **and in that** the control unit (9B) of the trailing electrode is configured to control the welding-wire advancing unit (14B) of the welding device (B) of the trailing electrode in order to start welding-wire advancing of the trailing electrode in dependence on the received synchronization signal (Y) and ignite an arc on the trailing electrode when the trailing electrode touches the workpiece (6) or penetrates a surrounding region of the guide electrode, which region is ionized by the arc of the guide electrode.

12. The welding arrangement (1) according to claim 9, **characterized in that** when the trailing electrode touches the workpiece (6) before the guide electrode, the control unit (9B) of the welding device (B) of the trailing electrode is configured to define the welding wire (3B) of the welding device (B) of the trailing electrode as the new guide electrode and to send a synchronization signal (Y) to the control unit (9A) of the welding device (A) of the guide electrode, the control unit (9A) of the welding device (A) of the guide electrode being configured to define the welding wire (3A) of the welding device (A) as the new trailing electrode upon receipt of the synchronization signal (Y), and **in that** the control unit (9B) of the welding device (B) of the new guide electrode is configured to ignite an arc at the new guide electrode when the welding wire (3B) of the new trailing electrode touches the workpiece (6) and the control unit (9A) of the welding device (A) of the new trailing electrode is configured to ignite an arc at the welding wire (3B) of the new trailing electrode when the new trailing electrode touches the workpiece (6) or penetrates a surrounding region that has been ionized by the arc of the new guide electrode.

13. The welding arrangement (1) according to any of claims 10 to 12, **characterized in that** the control unit (9A, 9B) of the guide electrode is configured to send a synchronization signal (Y) to the control unit (9A, 9B) of the trailing electrode when the arc of the guide electrode is ignited, the control unit (9A, 9B) of the trailing electrode being configured to control the welding-wire advancing unit (14A, 14B) of the welding device (A, B) of the trailing electrode when the synchronization signal (Y) is received in order to stop the welding-wire advancing of the trailing electrode when the arc of the guide electrode is ignited, to start said welding-wire advancing again after a certain waiting time (tW) has elapsed and to ignite an arc on the trailing electrode when the trailing electrode touches the workpiece (6) or penetrates the region surrounding the guide electrode, which region has been ionized by the arc of the guide electrode.

14. The welding arrangement (1) according to any of claims 9 to 13, **characterized in that** a pulse welding process, a welding process having reversing welding-wire advancing, a corona arc welding process or a short arc welding process are provided as welding processes for the guide electrode and/or the trailing electrode.

15. The welding arrangement (1) according to any of claims 9 to 14, **characterized in that** the guide electrode and the trailing electrode are positioned relative to one another in order to be fed by the welding-wire advancing units (14A, 14B) to a common weld pool (15) on the workpiece (6) and/or the control unit (9A) of the guide electrode and the control unit (9B) of the trailing electrode are integrated into a common control unit.

## Revendications

1. Procédé de mise en oeuvre d'un procédé de soudage multiple, dans lequel un processus de soudage est respectivement réalisé sur une pièce (6) à l'aide d'au moins deux fils de soudage (3A, 3B) comme électrodes fusibles, un premier fil de soudage (3A) étant prévu comme électrode de tête et l'au moins un autre fil de soudage (3B) étant prévu comme électrode suiveuse, les processus de soudage de l'électrode de tête et de l'électrode suiveuse étant respectivement commandés par une unité de commande (9A, 9B), une opération de démarrage du procédé de soudage multiple étant effectuée lorsque l'unité de commande (9A) de l'électrode de tête démarre un avancement de fil de soudage de l'électrode de tête et envoie un signal de synchronisation (Y) à l'unité de commande (9B) de l'électrode suiveuse lorsque l'électrode de tête a été déplacée sur une distance déterminée (zA) ou pendant un temps déterminé (tA), **caractérisé en ce que** l'unité de commande (9B) de l'électrode suiveuse démarre un avancement de fil de soudage de l'électrode suiveuse en fonction du signal de synchronisation (Y) reçu avant que l'électrode de tête ne vienne en contact avec la pièce (6).

2. Procédé selon la revendication 1, **caractérisé en ce que** l'électrode de tête vient en contact avec la pièce (6) avant l'électrode suiveuse, un arc électrique étant amorcé au niveau de l'électrode de tête lors du contact avec la pièce (6) et un arc électrique étant amorcé au niveau de l'électrode suiveuse lorsque l'électrode suiveuse vient en contact avec la pièce (6) ou pénètre dans une zone environnante de l'électrode de tête ionisée par l'arc électrique de l'électrode de tête.

3. Procédé selon la revendication 1, **caractérisé en ce que** l'électrode suiveuse vient en contact avec la pièce (6) avant l'électrode de tête, l'unité de commande (9B) de l'électrode suiveuse détectant un court-circuit (KSB) et envoyant un signal de synchronisation (Y) à l'unité de commande (9A) de l'électrode de tête, l'unité de commande (9A) de l'électrode de tête arrêtant l'avancement de fil de soudage de l'électrode de tête et l'unité de commande (9B) de l'électrode suiveuse arrêtant l'avancement de fil de soudage de l'électrode suiveuse, **en ce que** l'unité de commande (9B) de l'électrode suiveuse éloigne l'électrode suiveuse de la pièce (6) à une distance d'électrode déterminée (EB) et envoie un signal de synchronisation (Y) à l'unité de commande (9A) de l'électrode de tête, **en ce que** l'unité de commande (9A) de l'électrode de tête démarre l'avancement de fil de soudage de l'électrode de tête et un arc électrique est amorcé au niveau de l'électrode de tête lorsque l'électrode de tête vient en contact avec la pièce (6), l'unité de commande (9A) de l'électrode de tête envoyant un signal de synchronisation (Y) à l'unité de commande (9B) de l'électrode suiveuse lors de l'amorçage de l'arc électrique, **et en ce que** l'unité de commande (9B) de l'électrode suiveuse démarre l'avancement de fil de soudage de l'électrode suiveuse en fonction du signal de synchronisation (Y) reçu, un arc électrique étant amorcé au niveau de l'électrode suiveuse lorsque l'électrode suiveuse vient en contact avec la pièce (6) ou pénètre dans une zone environnante ionisée par l'arc électrique de l'électrode de tête.

4. Procédé selon la revendication 1, **caractérisé en ce que** l'électrode suiveuse vient en contact avec la pièce (6) avant l'électrode de tête, l'électrode suiveuse étant fixée comme électrode de tête et l'électrode de tête étant fixée comme électrode suiveuse, **en ce qu'**un arc électrique est amorcé au niveau de l'électrode de tête lors du contact avec la pièce (6) et un arc électrique est amorcé au niveau de l'électrode suiveuse lorsque l'électrode suiveuse vient en contact avec la pièce (6) ou pénètre dans une zone environnante ionisée par l'arc électrique de l'électrode de tête.

5. Procédé selon l'une des revendications 2 à 4, **caractérisé en ce que** l'unité de commande (9A, 9B) de l'électrode de tête envoie un signal de synchronisation (Y) à l'unité de commande (9A, 9B) de l'électrode suiveuse lors de l'amorçage de l'arc électrique de l'électrode de tête, **en ce que** l'unité de commande (9A, 9B) de l'électrode suiveuse arrête l'avancement de fil de soudage de l'électrode suiveuse lorsqu'elle reçoit le signal de synchronisation (Y) et l'électrode suiveuse est maintenue dans une position d'attente pendant un temps d'attente déterminé (tW) et, après l'écoulement du temps d'attente (tW), l'unité de commande (9A, 9B) de l'électrode suiveuse démarre l'avancement de fil de soudage de l'électrode suiveuse, l'arc électrique étant amorcé au niveau de l'électrode suiveuse lorsque l'électrode suiveuse vient en contact avec la pièce (6) ou pénètre dans la zone environnante de l'électrode de tête ionisée par l'arc électrique de l'électrode de tête.

6. Procédé selon l'une des revendications 1 à 5, **caractérisé en ce que** le processus de soudage de l'électrode de tête et/ou de l'électrode suiveuse est réalisé sous la forme d'un processus de soudage par impulsions, d'un processus de soudage avec avancement réversible de fil de soudage, d'un processus de soudage à l'arc électrique de pulvérisation ou d'un processus de soudage à l'arc électrique court.

7. Procédé selon l'une des revendications 1 à 6, **caractérisé en ce que** l'électrode de tête et l'électrode suiveuse sont acheminées vers un bain de fusion (15) commun au niveau de la pièce (6).

8. Procédé selon l'une des revendications 1 à 7, **caractérisé en ce qu'**une unité de commande commune est prévue pour l'unité de commande (9A) de l'électrode de tête et l'unité de commande (9B) de l'électrode suiveuse, laquelle unité de commande commune commande le processus de soudage au niveau de l'électrode de tête et le processus de soudage au niveau de l'électrode suiveuse.

9. Ensemble de soudage (1) destiné à la mise en oeuvre d'un procédé de soudage multiple sur une pièce (6) à l'aide d'au moins deux appareils de soudage (A, B) pour la mise en oeuvre de processus de soudage indépendants l'un de l'autre, chaque appareil de soudage comportant un fil de soudage (3A, 3B) comme électrode fusible, une unité d'avancement de fil de soudage (14A, 14B) et une unité de commande (9A, 9B) permettant de commander le processus de soudage respectif, un fil de soudage (3A) étant prévu comme électrode de tête et l'au moins un fil de soudage (3B) restant étant prévu comme électrode suiveuse, pour la mise en oeuvre d'une opération de démarrage du procédé de soudage multiple, l'unité de commande (9A) de l'électrode de tête étant conçue pour amener l'unité d'avancement de fil de soudage (14A) de l'appareil de soudage (A) de l'électrode de tête à démarrer un avancement de fil de soudage de l'électrode de tête et à envoyer un signal de synchronisation (Y) à l'unité de commande (9B) de l'électrode suiveuse lorsque l'électrode de tête a été déplacée sur une distance déterminée (zA) ou pendant un temps déterminé (tA), **caractérisé en ce que** l'unité de commande (9B) de l'électrode suiveuse est conçue pour amener l'unité d'avancement de fil de soudage (14B) de l'appareil de soudage (B) de l'électrode suiveuse à démarrer un avancement de fil de soudage de l'électrode suiveuse en fonction du signal de synchronisation (Y) reçu avant que l'électrode de tête ne vienne en contact avec la pièce (6).

10. Ensemble de soudage (1) selon la revendication 9, **caractérisé en ce que** l'unité de commande (9A) de l'électrode de tête est conçue pour amorcer un arc électrique au niveau de l'électrode de tête lorsque l'électrode de tête vient en contact avec la pièce (6) avant l'électrode suiveuse, **et en ce que** l'unité de commande (9B) de l'électrode suiveuse est conçue pour amorcer un arc électrique au niveau de l'électrode suiveuse lorsque l'électrode suiveuse vient en contact avec la pièce (6) ou pénètre dans une zone environnante de l'électrode de tête ionisée par l'arc électrique de l'électrode de tête.

11. Ensemble de soudage (1) selon la revendication 9, **caractérisé en ce que** l'unité de commande (9B) de l'électrode suiveuse est conçue pour détecter un court-circuit (KSB) et pour envoyer un signal de synchronisation (Y) à l'unité de commande (9A) de l'électrode de tête lorsque l'électrode suiveuse vient en contact avec la pièce (6) avant l'électrode de tête, l'unité de commande (9A) de l'électrode de tête étant conçue pour amener l'unité d'avancement de fil de soudage (14A) de l'appareil de soudage (A) de l'électrode de tête à arrêter l'avancement de fil de soudage de l'électrode de tête lorsqu'elle reçoit le signal de synchronisation (Y), et l'unité de commande (9B) de l'électrode suiveuse étant prévue pour amener l'unité d'avancement de fil de soudage (14B) de l'appareil de soudage (B) de l'électrode suiveuse à arrêter l'avancement de fil de soudage de l'électrode suiveuse, **en ce que** l'unité de commande (9B) de l'électrode suiveuse est conçue pour amener l'unité d'avancement de fil de soudage (14B) de l'appareil de soudage (B) de l'électrode suiveuse à éloigner l'électrode suiveuse de la pièce (6) à une distance d'électrode déterminée (EB) et à envoyer un signal de synchronisation (Y) à l'unité de commande (9A) de l'électrode de tête, **en ce que** l'unité de commande (9A) de l'électrode de tête est conçue, lors de la réception du signal de synchronisation (Y), pour amener l'unité d'avancement de fil de soudage (14A) de l'appareil de soudage (A) de l'électrode de tête à démarrer l'avancement de fil de soudage de l'électrode de tête et à amorcer un arc électrique au niveau de l'électrode de tête lorsque l'électrode de tête vient en contact avec la pièce (6), l'unité de commande (9A) de l'électrode de tête étant conçue pour envoyer un signal de synchronisation (Y) à l'unité de commande (9B) de l'électrode suiveuse lors de l'amorçage de l'arc électrique, **et en ce que** l'unité de commande (9B) de l'électrode suiveuse est conçue pour amener l'unité d'avancement de fil de soudage (14B) de l'appareil de soudage (B) de l'électrode suiveuse à démarrer l'avancement de fil de soudage de l'électrode suiveuse en fonction du signal de synchronisation (Y) reçu et à amorcer un arc électrique au niveau de l'électrode suiveuse lorsque l'électrode suiveuse vient en contact avec la pièce (6) ou pénètre dans une zone environnante de l'électrode de tête ionisée par l'arc électrique de l'électrode de tête.

12. Ensemble de soudage (1) selon la revendication 9, **caractérisé en ce que,** lorsque l'électrode suiveuse vient en contact avec la pièce (6) avant l'électrode de tête, l'unité de commande (9B) de l'appareil de soudage (B) de l'électrode suiveuse est conçue pour fixer le fil de soudage (3B) de l'appareil de soudage (B) de l'électrode suiveuse comme nouvelle électrode de tête et pour envoyer un signal de synchronisation (Y) à l'unité de commande (9A) de l'appareil de soudage (A) de l'électrode de tête, l'unité de commande (9A) de l'appareil de soudage (A) de l'électrode de tête étant conçue pour fixer le fil de soudage (3A) de l'appareil de soudage (A) comme nouvelle électrode suiveuse lorsqu'elle reçoit le signal de synchronisation (Y), **et en ce que** l'unité de commande (9B) de l'appareil de soudage (B) de la nouvelle électrode de tête est conçue pour amorcer un arc électrique au niveau de la nouvelle électrode de tête en cas de contact du fil de soudage (3B) de la nouvelle électrode de tête avec la pièce (6) et l'unité de commande (9A) de l'appareil de soudage (A) de la nouvelle électrode suiveuse est conçue pour amorcer un arc électrique au niveau du fil de soudage (3B) de la nouvelle électrode suiveuse lorsque la nouvelle électrode suiveuse vient en contact avec la pièce (6) ou pénètre dans une zone environnante ionisée par l'arc électrique de la nouvelle électrode de tête.

13. Ensemble de soudage (1) selon l'une des revendications 10 à 12, **caractérisé en ce que** l'unité de commande (9A, 9B) de l'électrode de tête est conçue pour envoyer un signal de synchronisation (Y) à l'unité de commande (9A, 9B) de l'électrode suiveuse lors de l'amorçage de l'arc électrique de l'électrode de tête, l'unité de commande (9A, 9B) de l'électrode suiveuse étant conçue, lorsqu'elle reçoit le signal de synchronisation (Y), pour amener l'unité d'avancement de fil de soudage (14A, 14B) de l'appareil de soudage (A, B) de l'électrode suiveuse à arrêter l'avancement de fil de soudage de l'électrode suiveuse lors de l'amorçage de l'arc électrique de l'électrode de tête, à le redémarrer après l'écoulement d'un temps d'attente déterminé (tW) et à amorcer un arc électrique au niveau de l'électrode suiveuse lorsque l'électrode suiveuse vient en contact avec la pièce (6) ou pénètre dans la zone environnante de l'électrode de tête ionisée par l'arc électrique de l'électrode de tête.

14. Ensemble de soudage (1) selon l'une des revendications 9 à 13,
**caractérisé en ce que** les processus de soudage pour l'électrode de tête et/ou l'électrode suiveuse sont prévus sous la forme d'un processus de soudage par impulsions, d'un processus de soudage avec avancement réversible de fil de soudage, d'un processus de soudage à l'arc électrique de pulvérisation ou d'un processus de soudage à l'arc électrique court.

15. Ensemble de soudage (1) selon l'une des revendications 9 à 14,
**caractérisé en ce que** l'électrode de tête et l'électrode suiveuse sont positionnées l'une par rapport à l'autre pour être acheminées par les unités d'avancement de fil de soudage (14A, 14B) vers un bain de fusion commun (15) au niveau de la pièce (6) **et/ou en ce que** l'unité de commande (9A) de l'électrode de tête et l'unité de commande (9B) de l'électrode suiveuse sont intégrées dans une unité de commande commune.
